# EUROPEAN PATENT SPECIFICATION

(11) **EP 1 113 569 B1**
(45) Date of publication and mention of the grant of the patent: **04.11.2009**
(21) Application number: 00944415.9
(22) Date of filing: 13.07.2000
(51) Int. Cl.: H02K 13/00

(54) **DEVICE FOR ENERGIZING DC MOTOR AND VALVE DEVICE COMPRISING DEVICE FOR ENERGIZING DC MOTOR**
ANORDNUNG ZUM SPEISEN EINES GLEICHSTROMMOTORS UND VENTILVORRICHTUNG MIT SOLCHER ANORDNUNG
DISPOSITIF PERMETTANT DE METTRE EN ROUTE UN MOTEUR CC ET DISPOSITIF DE SOUPAPE COMPRENANT UN DISPOSITIF DE MISE EN ROUTE D'UN MOTEUR CC

(30) Priority: 13.07.1999 JP 19825999
(43) Date of publication of application: 04.07.2001
(73) Proprietor: MITSUBISHI DENKI KABUSHIKI KAISHA, Chiyoda-ku Tokyo 100-8310 (JP)
(72) Inventor: FUJITA, Youichi, Mitsubishi Denki Kabushiki Kaisha, Tokyo 100-8310 (JP); YATSUKI, Osamu, Mitsubishi Denki Kabushiki Kaisha, Tokyo 100-8310 (JP); MIYAKE, Toshihiko, Mitsubishi Denki K.K., Tokyo 100-8310 (JP); MIYOSHI, Sotsuo, Mitsubishi Denki Kabushiki Kaisha, Tokyo 100-8310 (JP); NAKAHARA, Yuji, Mitsubishi Denki Kabushiki Kaisha, Tokyo 100-8310 (JP); OHSHIGE, Toyomi, Mitsubishi Denki Kabushiki Kaisha, Tokyo 100-8310 (JP)
(74) Representative: HOFFMANN EITLE
(86) International application number: PCT/JP2000/004680
(87) International publication number: WO 2001/005018

(56) References cited:
- DE-C- 897 878
- FR-A- 2 569 316
- FR-A- 2 735 626
- JP-A- 8 289 520
- US-A- 3 586 942
- US-A- 4 463 291

## Description

### TECHNICAL FIELD

The present invention relates to a current-carrying apparatus for a direct-current motor in which a direct current supplied from an electric power source is commutated into a plurality of electric currents in a commutator one after another and each commutated current is carried to each of a plurality of coils of a stator by using a slip ring. Also, the present invention relates to a valve apparatus, using the current-carrying apparatus for the direct-current motor, which is driven by the direct-current motor to open or close a passage of fluid such as exhaust air or an opening area.

### BACKGROUND ART

As is disclosed in Published Unexamined Japanese Patent Application H8-289520 (1996), in a conventional current-carrying apparatus for a direct-current motor, a commutator, which is divided into many commutator pieces in a circle-circumferential direction of the commutator, is arranged on an outermost circumference side. A plurality of slip rings, which are concentrically separated from each other in an annulus ring shape to have the same center as that of the commutator, are arranged on the inside of the commutator. A direct current supplied through a brush is commutated by a commutator into a plurality of currents having a desired number of phases one after another, and each current commutated by the commutator is carried from one corresponding slip ring to a corresponding coil of a stator through a corresponding brush.

Because the conventional current-carrying apparatus for the direct-current motor has the above configuration, the commutator is arranged on the outermost circumferential side, a sliding frictional resistance caused between the commutator and the brush is high. Therefore, the durability of the brush is considerably reduced , and there is a problem that the reliability of the conventional current-carrying apparatus for the direct-current motor is lowered.

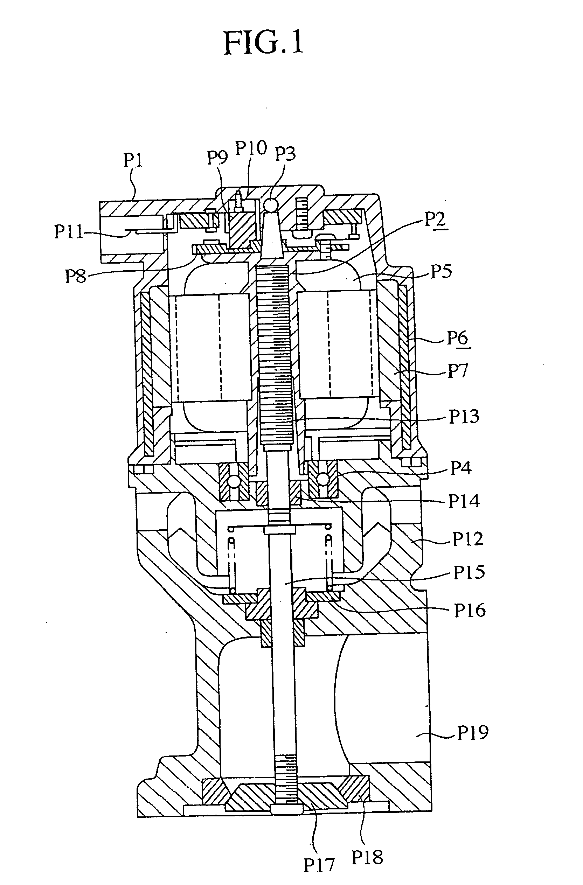

Also, Fig. 1 is a cross sectional view showing the configuration of a valve apparatus using a conventional current-carrying apparatus for a direct-current motor which is, for example, disclosed in Published Unexamined Japanese Patent Application H10-21306 (1998).

In Fig. 1, P1 indicates a motor case. P2 indicates a rotor arranged in the motor case P1. The top end of the rotor P2 is supported by a slide ball P3, and the bottom end of the rotor P2 is supported by a ball bearing P4, and a plurality of coils P5 are wound on the rotor P2. P6 indicates a stator arranged on an inner wall of the motor case P1 so as to surround the rotor P2. A plurality of permanent magnet magnetic poles P7 respectively placed in a position corresponding to the corresponding coil P5 of the rotor P2 are attached to the stator P6.

P8 indicates a commutator attached to the upper portion of the rotor P2. P9 indicates a brush which is in contact with the commutator P8 according to a resilient force of a spring P10. A direct current supplied through a connector terminal P11 is carried to the commutator P8 through the brush P9. P12 indicates a valve case connected with the motor case P1, and the valve case P12 is arranged coaxially with the motor case P1. P13 indicates a motor shaft screwed to the rotor P2 so as to be movable in its axial direction through a guide bush P14 in response to the rotation of the rotor P2. P15 indicates a valve driving shaft which is connected with the top end of the motor shaft P13 so as to be movable through a guide plate P16. P17 indicates a valve member which is fixedly attached to the top end of the valve driving shaft P15. The valve member P17 is attached to and detached from a seal member P18 attached to an inner wall of the valve case P12 to close and open a flow passage P19.

In the above configuration of the conventional valve apparatus, when a direct current supplied through the connector terminal P11 is carried to one coil P5 of the rotor P2 through the commutator P8, a direct current electric motor is obtained in co-operation with the corresponding permanent magnet magnetic pole P7 of the stator P6, and the rotor P2 is rotated. Thereafter, the motor shaft P13 screwed to the rotor P2 is also rotated with the rotor P2, and the motor shaft P13 is moved by a prescribed length in response to a degree of rotation of the motor shaft P13. That is, in case of Fig. 1, because the motor shaft P13 is moved toward the lower direction in Fig. 1, the valve member P17 fixedly attached to the top end of the motor shaft P13 is also moved toward the lower direction. Therefore, the valve member P17 is detached from the seal member P18, and the flow passage p19 is opened.

Because the conventional valve apparatus has the above configuration, the valve member P17 is attached to and detached from the seal member P18 through the valve driving shaft P15 by moving the motor shaft P13 screwed to the rotor P2 upward and downward according to the rotation of the rotor P2, and the flow passage p19 is closed and opened. Therefore, it is required to tightly insert the motor shaft P13 into the rotor P2, and it is required to wind the coils P5 on the outer circumferential side of the rotor P5. In this case, the outer diameter of the rotor P2 is large so as to increase a moment of inertia in the rotor P2. Therefore there is a problem that the response of (in) the open-close operation of the valve member P17 deteriorates.

DE 897 878 C discloses a direct current motor with commutator slip rings brushes for direct current and brushes for the slip rings which are all disposed axial.

FR-A-2 735 626 discloses a starting and generating apparatus comprising a starting coil, a generating coil and a rotary inner magnet-type rotor. A brush holder with a plurality of brushes on its outer surface is provided at the side of this rotary inner magnet-type rotor. A plurality of commutators are arranged specific partitions on the inner surface of a fixed communitator holder which is provided so as to face the outer surface of the brush holder.

The present invention is provided to solve the above problems, and an object of the present invention is to provide a current-carrying apparatus for a direct-current motor in which the reliability is improved while suppressing brush wear.

Also, the present invention is provided to solve the above problems, and another object of the present invention is to provide a valve apparatus using the current-carrying apparatus for the direct-current motor in which the response performance in an open-close operation of a valve is superior by reducing a moment of inertia in a rotor.

### DISCLOSURE OF THE INVENTION

A current-carrying apparatus for a direct-current motor according to the present invention comprises a commutator (11, 19), which has a plurality of commutator pieces (11a, 19a) arranged in a circle-circumferential direction of the commutator, for commutating a direct current, which is supplied from an electric power source through a first brush (14, 20), to provide N commutated currents (N is an integral number higher than 1), having phases which differ from each other, one after another, and N slip rings (12, 18), which are separated from each other in an annulus ring shape and concentrically arranged in a circumferential area of the commutator and are respectively and electrically connected with one commutator piece of the commutator, for respectively carrying one of the commutated currents obtained in the commutator to a corresponding coil of a stator (2) through a second brush (15, 21). Accordingly, the reliability of the current-carrying apparatus can be improved. A slip ring and the respective commutator pieces are integrally formed.

In a current-carrying apparatus for a direct-current motor according to the present invention, the N slip rings are formed by dividing a circular disk into N divided portions which are respectively formed in the annulus ring shape so as to be concentrically arranged, and the commutator is formed by dividing a cylindrical member, which is protruded from the center of the circular disk, into a plurality of commutator pieces (19a) which are arranged in a circle-circumferential direction of the cylindrical member. Accordingly, the reliability of the current-carrying apparatus can be furthermore improved.

In a current-carrying apparatus for a direct-current motor according to the present invention, a connection piece (19b) is formed in a bottom portion of each of the commutator pieces of the commutator, each connection piece is folded so as to extend along reverse surfaces of the slip rings (18) and to be electrically connected with the corresponding slip ring. Accordingly, the reliability of the current-carrying apparatus can be improved, and a working efficiency for the wiring can be improved.

In a current-carrying apparatus for a direct-current motor according to the present invention, the slip rings are formed of N annular members (23a; 25a; 27a) which are possible to be tightly fitted to each other in a radial direction of the annular members, and the commutator is formed of a large number of commutator pieces (23b; 25b; 27b) which are composed of a plurality of connection portions (24c; 26c; 28c) of different lengths which extend from the inside of the annular members, are folded in a perpendicular direction to the annular members and are cylindrically arranged on a condition that the annular members are tightly fitted to each other. Accordingly, the reliability of the current-carrying apparatus can be improved, and a current-carrying apparatus for a direct-current motor can be provided in which a manufacturing cost is lowered and a working efficiency for the wiring is improved.

In a current-carrying apparatus for a direct-current motor according to the present invention, the commutator and the slip rings are formed of a plurality of arcuate portions (24b; 26b; 28b) and a plurality of rectangular portions( 24c; 26c; 28c) respectively protruded from the corresponding arcuate portion, the arcuate portions are connected with each other through thin-walled portions (24a; 26a; 28a), the annular members are formed of the arcuate portions which are annularly arranged by bending the thin-walled portions of the arcuate portions, and the commutator pieces of the commutator are formed of the rectangular portions each of which is folded in a perpendicular direction to the corresponding arcuate portion at a position which is apart from the arcuate portion by a prescribed length. Accordingly, the reliability of the current-carrying apparatus can be improved, and a current-carrying apparatus for a direct-current motor can be provided in which a manufacturing cost is lowered and a working efficiency for the wiring is improved.

In a current-carrying apparatus for a direct-current motor according to the present invention, each of the rectangular portions is formed according to a rolling operation. Accordingly, a current-carrying apparatus for a direct-current motor can be provided in which a material yield is improved.

A current-carrying apparatus for a direct-current motor according to the present invention comprises a commutator (30, 31, 33), which has a plurality of commutator pieces (30b, 31b, 33b) arranged in a circle-circumferential direction of the commutator, for commutating a direct current, which is supplied from an electric power source through a first brush (20), to provide N commutated currents (N is an integral number higher than 1), having phases which differ from each other, one after another, and N slip rings (30a, 31a, 33a), which are separated from each other in an axial direction of the commutator in an annular shape coaxially arranged and are respectively and electrically connected with one piece of the commutator, for respectively carrying one of the commutated currents obtained in the commutator to a corresponding coil (4) of a stator (2) through a second brush (21). A slip ring and the respective commutator pieces are integrally formed. Accordingly, a current-carrying apparatus for a direct-current motor can be provided in which the reliability is improved.

In a current-carrying apparatus for a direct-current motor according to the present invention, the commutator and the slip rings are formed by annularly arranging a first plate-shaped member (30), a second plate-shaped member (31) and a third plate-shaped member (33), the first plate-shaped member is composed of a band-shaped portion (30a) and a plurality of rectangular portions (30b) protruded at regular intervals from one side of the band-shaped portion, the second plate-shaped member is composed of a band-shaped portion (31a) and a plurality of rectangular portions (31b) protruded at the regular intervals from one side of the band-shaped portion, one side of each rectangular portion of the second plate-shaped member faces one side of one rectangular portion of the first plate-shaped member, and the other side of the rectangular portion of the second plate-shaped member faces another rectangular portion of the first plate-shaped member through an opening (32) having a prescribed width, the third plate-shaped member is composed of a band-shaped portion (33a) and a plurality of rectangular portions (33b) protruded at the regular intervals from one side of the band-shaped portion, the side of the band-shaped portion of the third plate-shaped member faces the other side of the band-shaped portion of the second plate-shaped member, each rectangular portion of the third plate-shaped member extends along a reverse surface of the band-shaped portion of the second plate-shaped member, and a top portion of each rectangular portion of the third plate-shaped member is arranged in the corresponding opening which is placed on the other side of the corresponding rectangular portion of the second plate-shaped member. Accordingly, the reliability of the current-carrying apparatus can be improved, and a current-carrying apparatus for a direct-current motor can be provided in which a manufacturing cost is lowered and a working efficiency for the wiring is improved.

In a current-carrying apparatus for a direct-current motor according to the present invention, the first plate-shaped member and the second plate-shaped member are integrally formed through a thin-walled connecting portion (35). Accordingly, a current-carrying apparatus for a direct-current motor can be provided in which a material yield is improved.

In a current-carrying apparatus for a direct-current motor according to the present invention, the commutator and the slip rings are formed by annularly arranging a first plate-shaped member (36) and a second plate-shaped member (37), a plurality of windows (36a) respectively having the same prescribed window width are formed in the first plate-shaped member at prescribed intervals which are almost equal to two times of the window width, a groove (36b) is formed between each pair of windows adjacent to each other on a reverse surface of the first plate-shaped member so as to extend straight from a bottom side of one window toward a bottom side of the other window, to turn upward at a mid point between the bottom sides of the windows, to extend straight and to turn and extend straight to a top side of the other window, the second plate-shaped member is composed of a band-shaped portion (37a) and a plurality of rectangular portions (37b) protruded from one side of the band-shaped portion at the same prescribed intervals as those of the windows of the first plate-shaped member, the side of the band-shaped portion of the second plate-shaped member faces one side of the first plate-shaped member, each rectangular portion of the second plate-shaped member extends along a reverse surface of the first plate-shaped member, and a top portion of each rectangular portion of the second plate-shaped member is placed in the corresponding window. Accordingly, the reliability of the current-carrying apparatus can be improved, and a current-carrying apparatus for a direct-current motor can be provided in which a manufacturing cost is lowered and a working efficiency for the wiring is improved.

A valve apparatus using a current-carrying apparatus for a direct-current motor according to the present invention comprises a stator (122) in which a prescribed number of coils (124) are arranged at almost equal intervals in a circle-circumferential direction of each of a plurality of stator cores (123), a rotor (128) in which a plurality of permanent magnet magnetic poles (129) are arranged on an outer circumferential surface of the rotor so as to place each permanent magnet magnetic pole at a position corresponding to that of the corresponding coil of the stator, current-carrying means (137) for commutating a direct current, which is supplied from an electric power source through the rotor, to a commutated current by using the rotor and for carrying the commutated current to each coil of the stator, a shaft member (130), which is arranged in a center of the rotor and is movable in an axial direction of the shaft member according to the rotation of the rotor, and a valve member (145) for performing an open operation and a close operation according to the movement of the shaft member. Accordingly, a valve apparatus can be provided with reductions in the moment of inertia in the rotor and superior response performance for the valve open-close operation.

In a valve apparatus using a current-carrying apparatus for a direct-current motor according to the present invention, the current-carrying means is integrally molded with the permanent magnet magnetic poles of the rotor by using resin, and the current-carrying means comprises a commutator (132), which has a plurality of divided portions, for commutating the direct current, which is supplied from the electric power source through a first brush (135), to N commutated currents (N is an integral number higher than 1) having different phases from each other one after another, and N slip rings (133), which are respectively and electrically connected with one divided portion of the commutator, for carrying each of the commutated currents obtained in the commutator to the corresponding coil of the stator through a second brush (136). Accordingly, a valve apparatus can be provided with reductions in the moment of inertia in the rotor and superior response performance for the valve open-close operation.

In a valve apparatus using a current-carrying apparatus for a direct-current motor according to the present invention, the divided portions of the commutator are formed by dividing a center portion or an outer end annular portion of a circular disk (131) in a circle-circumferential direction of the circular disk, and the slip rings are formed by dividing a portion of the circular disk, which is placed on an outer circumferential side or an inner circumferential side of the commutator, into N divided portions concentrically and annularly arranged. Accordingly, a valve apparatus can be provided with superior response performance for the valve open-close operation and which has a reduced size.

In a valve apparatus using a current-carrying apparatus for a direct-current motor according to the present invention, the current-carrying means is arranged on one side of both the stator and the rotor in an axial direction of both the stator and the rotor, and the valve member is arranged on the other side of both the stator and the rotor. Accordingly, a valve apparatus can be provided in which the influence of the heat generated in the current-carrying means on the valve member is prevented and the reliability is improved.

In a valve apparatus using a current-carrying apparatus for a direct-current motor according to the present invention, the stator is annularly formed by winding the coils on a plurality of magnetic pole teeth (123a) of each of the stator cores, which are formed of a plurality of magnetic materials arranged in layers and of which yoke portions (123b) are connected with each other through connection portions (123c) in a band shape, and by bending the connection portions of each stator core. Accordingly, a valve apparatus can be provided
in which the winding operation is easily performed and an assembly operation efficiency is improved.

### BRIEF DESCRIPTION OF THE DRAWINGS

Fig. 1 is a cross sectional view showing the configuration of a valve apparatus using a conventional current-carrying apparatus for a direct-current motor.
Fig. 2 is a cross sectional view showing the configuration of a current-carrying apparatus for a direct-current motor according to a first embodiment of the present invention.
Fig. 3 shows a flow of an electric current in the current-carrying apparatus shown in Fig. 2, (A) is a cross sectional view, and (B) is a plan view.
Fig. 4 is a diagonal view showing the configuration of both a commutator and a slip ring shown in Fig. 2.
Fig. 5 is a plan view of a stator shown in Fig. 2 and shows a manufacturing method of the stator.
Fig. 6 is a diagonal view showing the configuration of a current-carrying unit of a current-carrying apparatus for a direct-current motor according to a second embodiment of the present invention.
Fig. 7 is a diagonal view showing the configuration of a commutator shown in Fig. 6.
Fig. 8 shows the configuration of a plurality of slip rings shown in Fig. 6, (A) is a diagonal view showing surfaces of the slip rings, and (B) is a diagonal view showing reverse surfaces of the slip rings.
Fig. 9 is a diagonal view showing the configuration of a current-carrying unit, which is in the middle of assembly operation, in a current-carrying apparatus for a direct-current motor according to a third embodiment of the present invention.
Fig. 10 shows the configuration of a first current-carrying member shown in Fig. 9, (A) is a diagonal view of the first current-carrying member, and (B) is an expansion plan view of the first current-carrying member.
Fig. 11 shows the configuration of a second current-carrying member shown in Fig. 9, (A) is a diagonal view of the second current-carrying member, and (B) is an expansion plan view of the second current-carrying member.
Fig. 12 shows the configuration of a third current-carrying member shown in Fig. 9, (A) is a diagonal view of the third current-carrying member, and (B) is an expansion plan view of the third current-carrying member.
Fig. 13 is a plan view of the first current-carrying member, the second current-carrying member and the third current-carrying member and shows an example of a forming method of each current-carrying unit.
Fig. 14 is a diagonal view showing the configuration of a current-carrying unit of a current-carrying apparatus for a direct-current motor according to a fourth embodiment of the present invention.
Fig. 15 is an expansion view showing the current-carrying unit shown in Fig. 14, (A) is a plan view, and (B) is a side view.
Fig. 16 is an expansion view showing a current-carrying unit of which the configuration is different from that of the current-carrying unit shown in Fig. 14, (A) is a plan view, and (B) is a side view.
Fig. 17 is an expansion view showing the configuration of a current-carrying unit of a current-carrying apparatus for a direct-current motor according to a fifth embodiment of the present invention, (A) is a plan view, and (B) is a side view.
Fig. 18 is a cross sectional view showing the configuration of a valve apparatus using a current-carrying apparatus for a direct-current motor according to a sixth embodiment of the present invention.
Fig. 19 shows a flow of an electric current in a motor unit of the current-carrying apparatus shown in Fig. 18, (A) is a cross sectional view of the motor unit, and (B) is a plan view of the motor unit.
Fig. 20 is a diagonal view showing the configuration of a current-carrying means of the motor unit shown in Fig. 19.
Fig. 21 is a plan view of a stator of the motor unit of the valve apparatus shown in Fig. 18 and shows a manufacturing method of the stator.
Fig. 22 is a cross sectional view showing the configuration of a valve apparatus which is different from that shown in Fig. 18 according to the sixth embodiment of the present invention.

### BEST MODE FOR CARRYING OUT THE INVENTION

Hereinafter, the best mode for carrying out the present invention will now be described with reference to the accompanying drawings to explain the present invention in more detail.

### EMBODIMENT 1

Hereinafter, an embodiment of the present invention is described with reference to drawings.

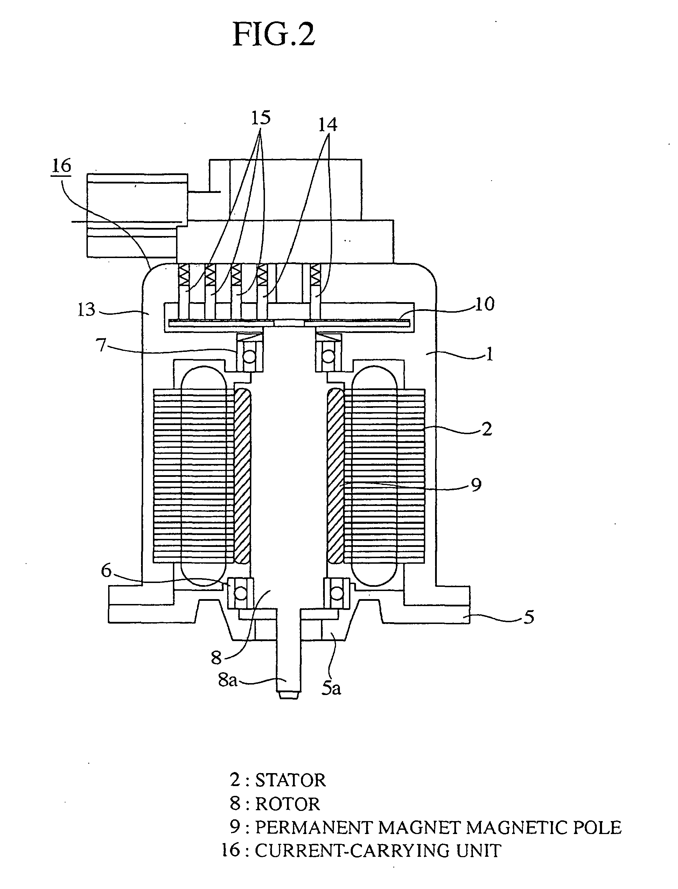

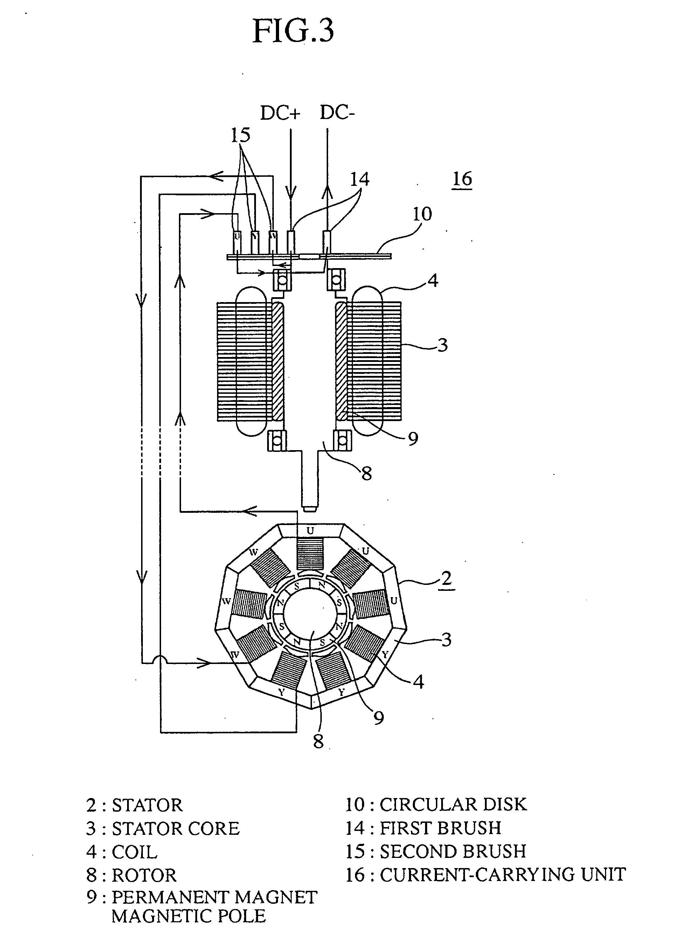

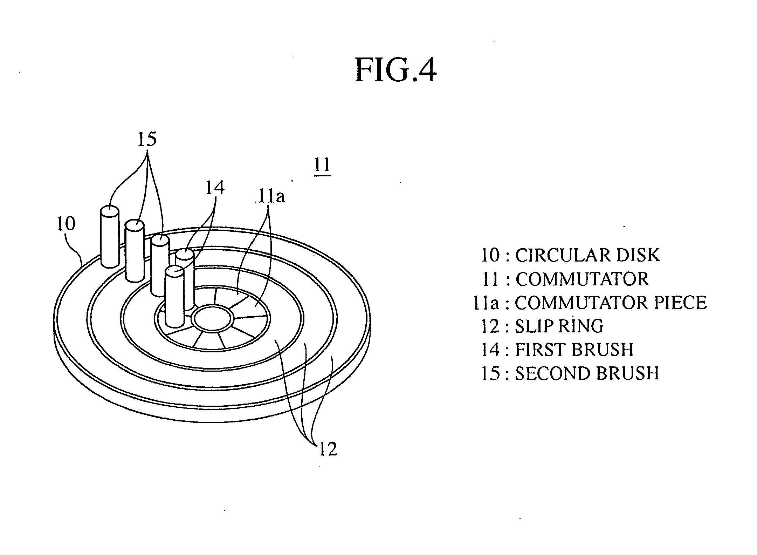

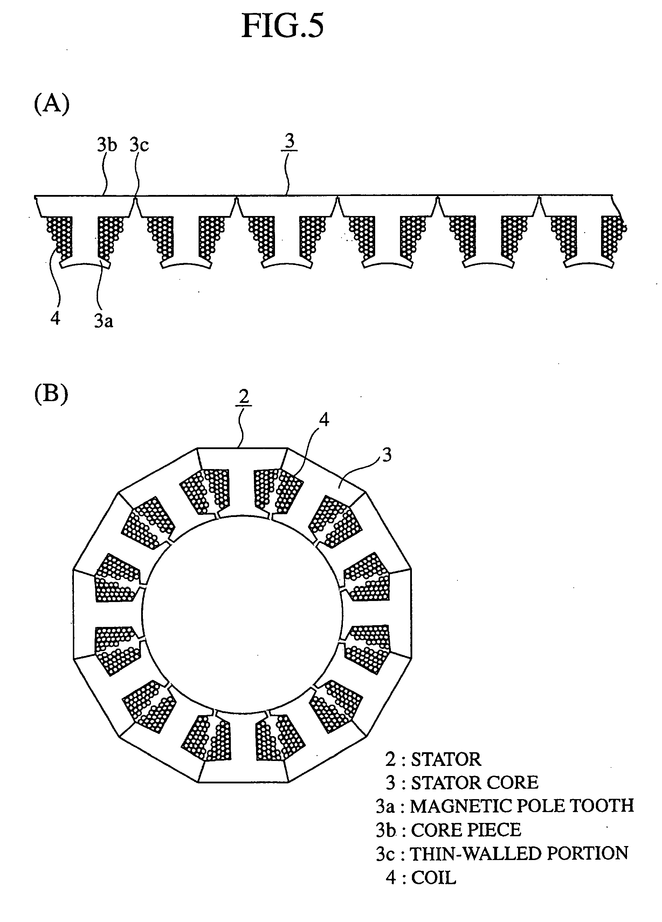

Fig. 2 is a cross sectional view showing the configuration of a current-carrying apparatus for a direct-current motor according to a first embodiment of the present invention. Fig. 3 shows a flow of an electric current in the current-carrying apparatus shown in Fig. 2, (A) is a cross sectional view, and (B) is a plan view. Fig. 4 is a diagonal view showing the configuration of both a commutator and a slip ring shown in Fig. 2. Fig. 5 is a plan view of a stator shown in Fig. 2 and shows a manufacturing method of the stator.

In Fig. 1, 1 indicates a motor case which is formed of resin material. 2 indicates a stator which is integrally formed with the motor case 1 by using a resin mold. As shown in Fig. 5(A), each of a plurality of magnetic pole teeth 3a of a stator core 3 is protruded from a core piece 3b, each of a plurality of magnetic materials is formed by connecting the plurality of core pieces 3b with each other through thin-walled portions 3c of the core pieces 3b, a prescribed number of magnetic materials are arranged in layers to form a plurality of stator cores 3, each stator core 3 is maintained to this condition to heighten a winding performance of the stator core 3, and coils 4 are wound on the magnetic pole teeth 3a of each stator core 3 by using a winding machine (not shown). Thereafter, as shown in Fig. 5(B), the thin-walled portions 3c of each stator core 3 are folded so as to form a stator 2 in a cylinder shape.

5 indicates a flange member attached to one end of the motor case 1, and a boss portion 5a for supporting a bearing 6 is protruded from the central portion of the flange member 5. 7 indicates a bearing which is supported by the other side of the motor case 1, and the bearing 7 is arranged coaxially with the bearing 6. 8 indicates a rotor of which both ends are supported by the bearings 6 and 7 respectively. A plurality of permanent magnet magnetic poles 9 are arranged in the outer circumferential area of the rotor 8, and each permanent magnet magnetic pole 9 is placed at a position corresponding to the corresponding coil 4 of the stator 2. A motor shaft 8a is protruded from one end of the rotor 8 supported by the bearing 6.

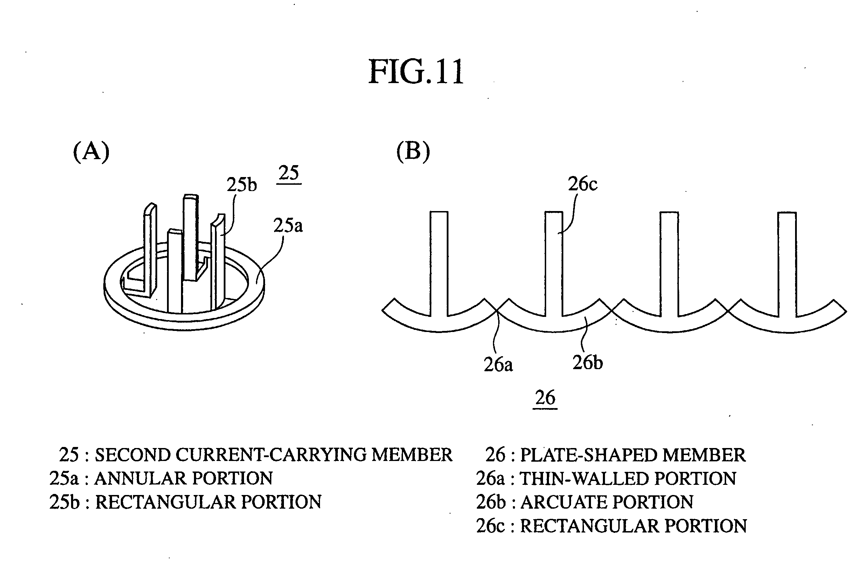

10 indicates a circular disk which is fixedly attached to the other end of the rotor 8 so as to be rotated with the rotor 8. As shown in Fig. 4, 11 indicates a commutator which is formed by dividing a central ring portion of the circular disk 10 into a plurality of commutator pieces 11a arranged in a circle-circumferential direction of the commutator 11. 12 indicates a plurality of slip rings which are formed by concentrically and annularly dividing a portion of the circular disk 10 placed on the outer circumference side of the commutator 11 into N portions (N is an integral number higher than 1, and three portions in Fig. 4). 13 indicates a bracket attached to the other end of the motor case 1. 14 indicates a pair of first brushes which are supported by the bracket 13 so as to be insulated from the bracket 13. The top end of each first brush 14 comes in contact with each commutator piece 11a of the commutator 11 under a prescribed pressure so as to be able to slide on the commutator piece 11a. 15 indicates a plurality of second brushes which are supported by the bracket 13 so as to be insulated from the bracket 13. The top end of each second brush 15 comes in contact with the corresponding slip ring 12 under a prescribed pressure so as to be able to slide on the slip ring 12. A current-carrying unit 16 is composed of the circular disk 10, the commutator 11, the slip rings 12, the bracket 13, the first brushes 14 and the second brushes 15.

Next, an operation of the current-carrying apparatus for the direct-current motor, which has the above-described configuration according to the first embodiment, is described.

Initially, when a direct current supplied from an electric power source (not shown) flows into the current-carrying unit 16 through one first brush 14, as shown in Fig. 3, the direct current is commutated in the commutator 11 and flows into one slip ring 12. Thereafter, the commutated current is supplied to the stator 2 through one second brush 15 and flows into one coil 4. Thereafter, the commutated current flows into another second brush 15, another slip ring 12 and the commutator 11 in that order and flows out to the electric power source through the other first brush 14. Therefore, a rotation power is generated in the rotor 8 according to an interaction between a magnetic flux generated in the coil 4, in which the electric current flows, and the permanent magnet magnetic poles 9 of the rotor 8, and the circular disk 10 is rotated with the rotor 8 by the rotation power. Therefore, because the combination of the first brush 14 and the commutator piece 11a contacting with the first brush 14 is changed, the coil 4, in which the current flows, is changed to another one each time the combination of the first brush 14 and the commutator piece 11a is changed. Therefore, the rotor 8 is continuously rotated.

As is described above, in the first embodiment, the commutator 11 is formed by dividing the central annular portion of the circular disk 10 into the plurality of commutator pieces 11a arranged in a circle-circumferential direction of the central annular portion. Therefore, as is described in the prior art, as compared with a commutator arranged on the outermost circumference side of slip rings, a circumference length of the commutator 11 is shortened, and a sliding frictional resistance generated between each commutator piece 11a of the commutator 11 and each of the first brushes 14 is reduced. Accordingly, the worn-out of the first brushes 14 can be suppressed, and the reliability in the current-carrying apparatus for the direct-current motor can be improved.

### EMBODIMENT 2

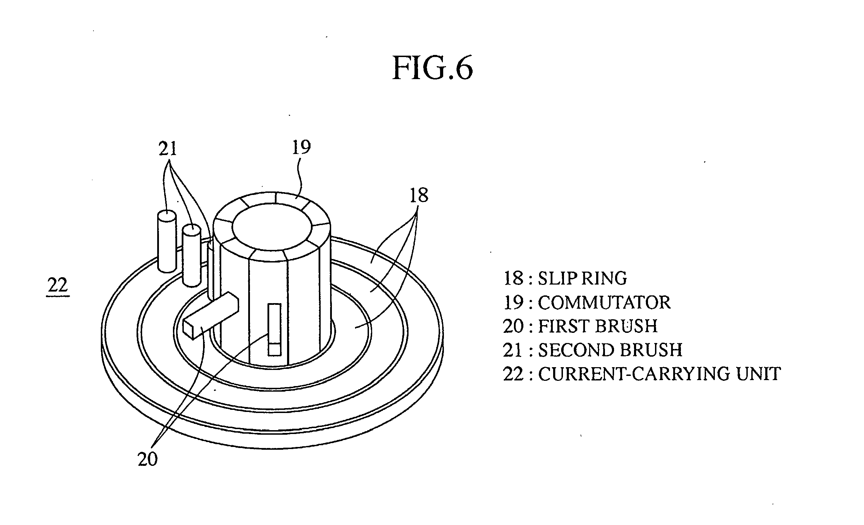

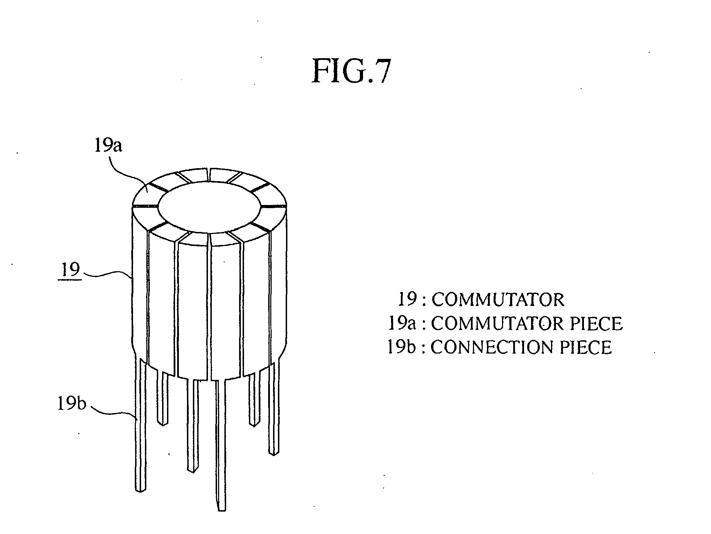

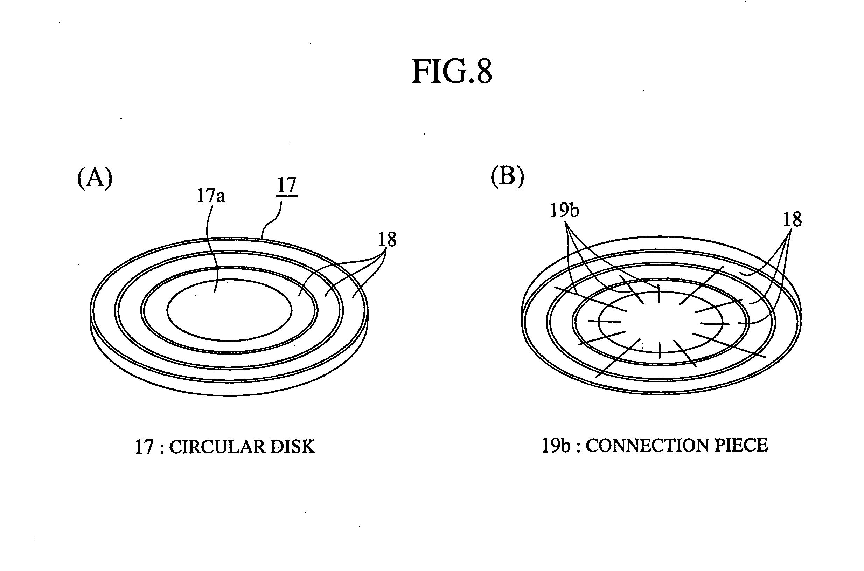

Fig. 6 is a diagonal view showing the configuration of a current-carrying unit of a current-carrying apparatus for a direct-current motor according to a second embodiment of the present invention. Fig. 7 is a diagonal view showing the configuration of a commutator shown in Fig. 6. Fig. 8 shows the configuration of a plurality of slip rings shown in Fig. 6, (A) is a diagonal view showing surfaces of the slip rings, and (B) is a diagonal view showing reverse surfaces of the slip rings.

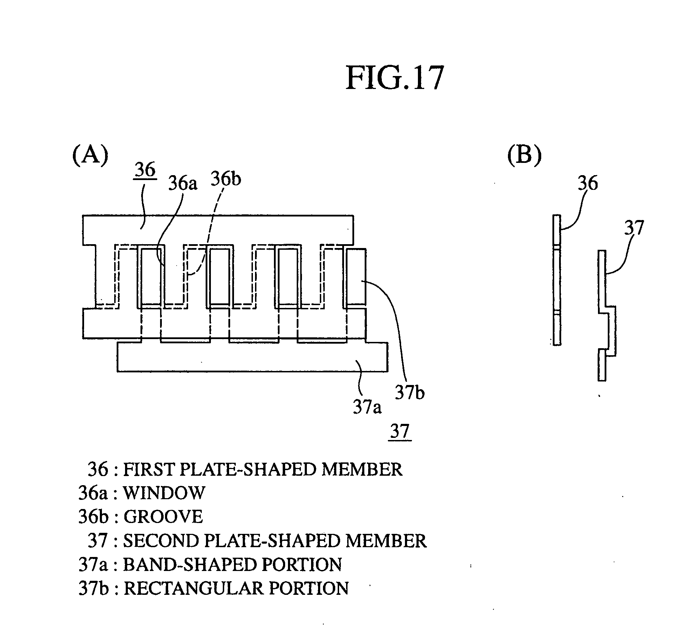

In Fig. 6, 17 indicates a circular disk which is fixedly attached to the other end of the rotor 8, in the same manner as in the first embodiment, so as to be rotated with the rotor 8. 18 indicates a plurality of slip rings which are obtained by dividing an outer circumference portion of the circular disk 17 into three portions concentrically and annularly arranged. As shown in Fig. 8, a central portion 17a of the circular disk 17 is not used for the slip rings 18.

19 indicates a commutator. As shown in Fig. 7, the commutator 19 is composed of a plurality of commutator pieces 19a, which are obtained by dividing a cylindrical member into a plurality of element pieces (12 element pieces in Fig. 7) in a circle-circumferential direction of the cylindrical member, and a plurality of connection pieces 19b each of which is protruded from the bottom portion of one commutator piece 19a. The commutator 19 is placed on the central portion 17a of the circular disk 17 so as to be protruded from the ***center (centrer)*** of the circular disk 17, each connection piece 19b penetrates through the central portion 17a of the circular disk 17 and is folded in a radial direction of the circular disk 17 so as to extend along the reverse surface of the circular disk 17 as shown in Fig. 8(B), and each connection piece 19b is electrically connected with the corresponding slip ring 18. 20 indicates a pair of first brushes. The top end of each first brush 20 comes in contact with each commutator piece 19a under a prescribed pressure so as to be able to slide on the commutator piece 19a. 21 indicates a plurality of second brushes. The top end of each second brush 21 comes in contact with the corresponding slip ring 18 under a prescribed pressure so as to be able to slide on the slip ring 18. A current-carrying unit 22 is composed of the circular disk 17, the slip rings 18, the commutator 19, the first brushes 20 and the second brushes 21.

As is described above, in the second embodiment, the plurality of commutator pieces 19a are formed by dividing a cylindrical member into a plurality of element pieces in its circle-circumferential direction, and the commutator 19 is composed of the plurality of commutator pieces 19a. Therefore, a sliding frictional resistance generated between each commutator piece 19a and each first brush 20 can be reduced. Also, because the commutator pieces 19a are protruded from the slip rings 18 upward, a contacting area of each commutator piece 19a with each first brush 20 can be sufficiently obtained. Therefore, a large amount of electric current can pass through the current-carrying unit 22, and the reliability of the current-carrying apparatus can be improved. Also, because each connection piece 19b formed on the bottom side of the corresponding commutator piece 19a is folded so as to be electrically connected with the reverse surface of the corresponding slip ring 18, the connection between the commutator 19 and the slip rings 18 can be easily performed, and a working efficiency for the wiring of the connection pieces 19b with the slip rings 18 can be improved.

### EMBODIMENT 3

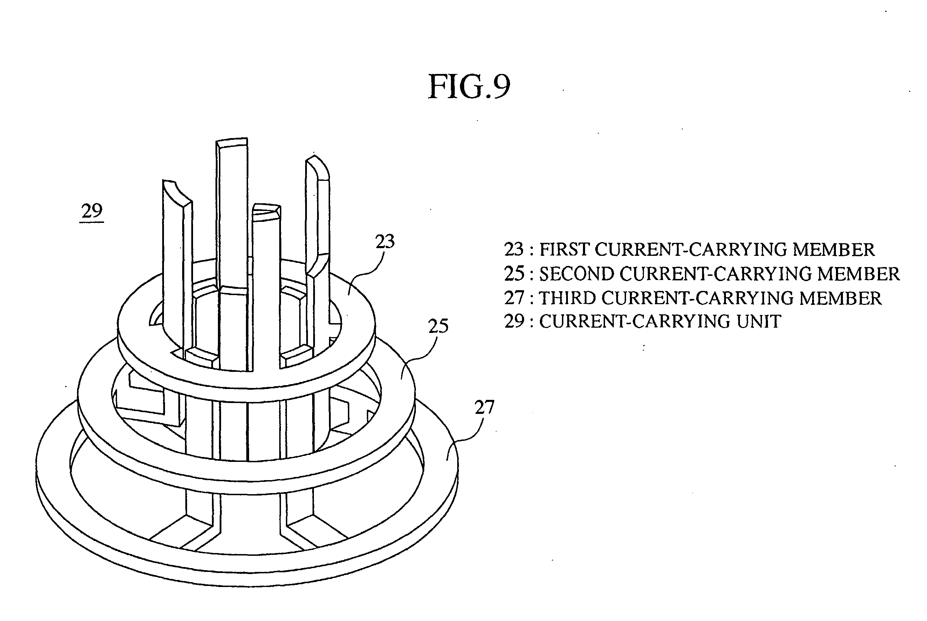

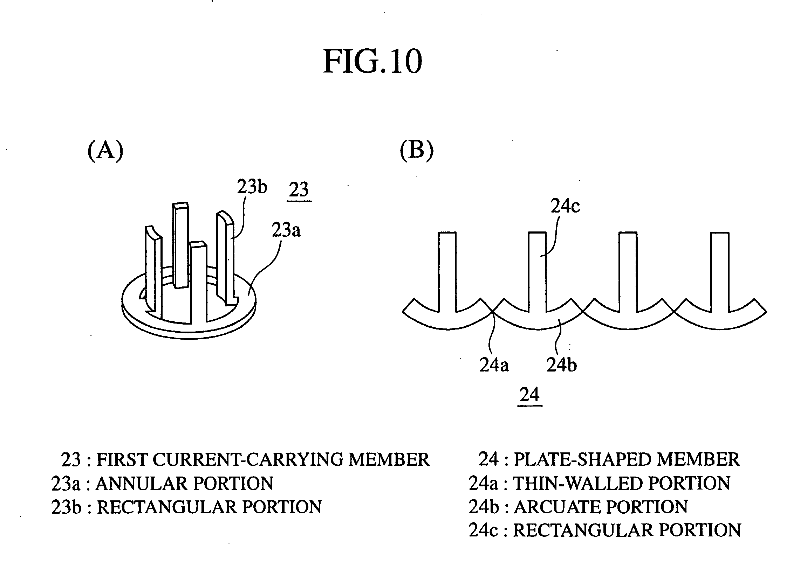

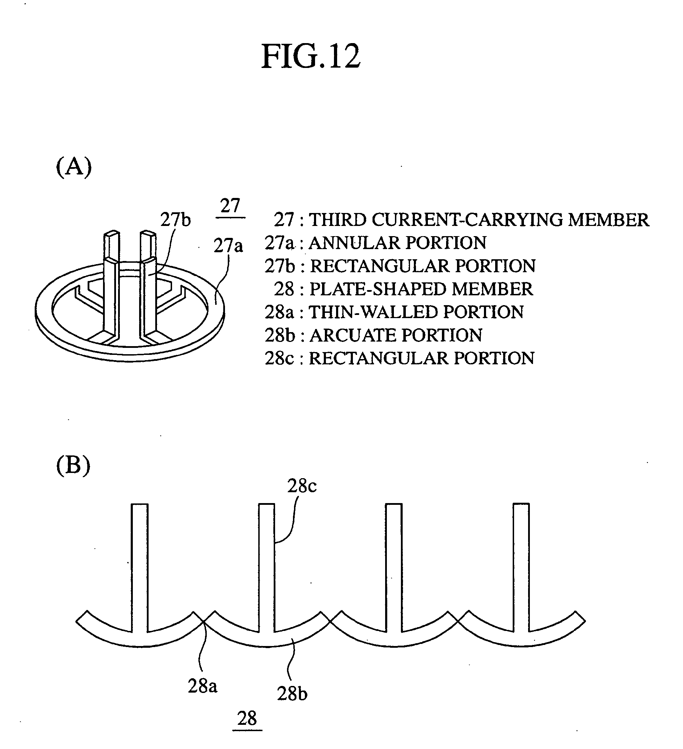

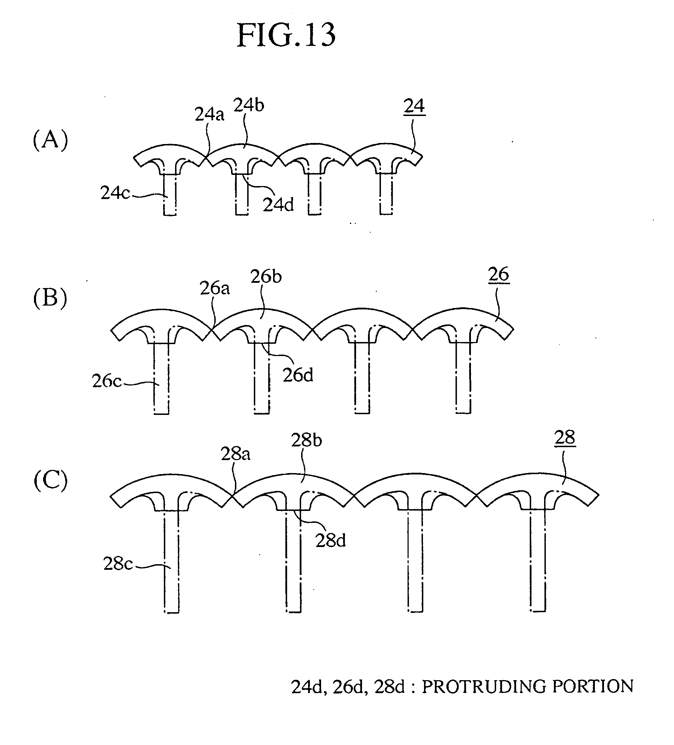

Fig. 9 is a diagonal view showing the configuration of a current-carrying unit, which is in the middle of assembly operation, in a current-carrying apparatus for a direct-current motor according to a third embodiment of the present invention. Fig. 10 shows the configuration of a first current-carrying member shown in Fig. 9, (A) is a diagonal view of the first current-carrying member, and (B) is an expansion plan view of the first current-carrying member. Fig. 11 shows the configuration of a second current-carrying member shown in Fig. 9, (A) is a diagonal view of the second current-carrying member, and (B) is an expansion plan view of the second current-carrying member. Fig. 12 shows the configuration of a third current-carrying member shown in Fig. 9, (A) is a diagonal view of the third current-carrying member, and (B) is an expansion plan view of the third current-carrying member. Fig. 13 is a plan view of the first current-carrying member, the second current-carrying member and the third current-carrying member and shows an example of a forming method of each current-carrying unit.

In Fig. 9 and Fig. 10(A), 23 indicates a first current-carrying member formed of an annular portion 23a and a plurality of rectangular portions 23b. Each rectangular portion 23b is folded in a perpendicular direction to the annular portion 23a at a position which is apart from the inside of the annular portion 23a by a prescribed length. As shown in Fig. 10(B), the annular portion 23a is formed by preparing a plate-shaped member 24, which is composed of a plurality of arcuate portions 24b connected with each other through thin-walled portions 24a and a plurality of rectangular portions 24c respectively protruded from the inside of the corresponding arcuate portion 24b, and by bending the thin-walled portions 24a of the arcuate portions 24b so as to arrange the arcuate portions 24b in an annular shape. Each rectangular portion 23b is formed by folding the corresponding rectangular portion 24c in a perpendicular direction to the arcuate portion 24b at a position which is apart from the inside of the corresponding arcuate portion 24b by a prescribed length.

As shown in Fig. 9 and Fig. 11(A), 25 indicates a second current-carrying member formed of an annular portion 25a and a plurality of rectangular portions 25b. Each rectangular portion 25b is folded in a perpendicular direction to the annular portion 25a at a position which is apart from the inside of the annular portion 25a by a prescribed length. As shown in Fig. 11(B), the annular portion 25a is formed by preparing a plate-shaped member 26, which is composed of a plurality of arcuate portions 26b connected with each other through thin-walled portions 26a and a plurality of rectangular portions 26c respectively protruded from the inside of the corresponding arcuate portion 26b, and by bending the thin-walled portions 26a of the arcuate portions 26b so as to arrange the arcuate portions 26b in an annular shape. A radius of curvature in each arcuate portion 26b is longer than that of the arcuate portion 24b of the first current-carrying member 23 by a prescribed length. Each rectangular portion 26c is longer than the rectangular portion 24c of the first current-carrying member 23 and protrudes by a prescribed length longer than that in the protrusion of the rectangular portion 24c. Each rectangular portion 25b is formed by sinking the corresponding rectangular portion 26c from the corresponding arcuate portion 26b downward by a thickness of the annular portion 23a of the first current-carrying member 23 and by folding the rectangular portion 26c in a perpendicular direction to the arcuate portion 26b at a position which is apart from the inside of the arcuate portion 26b by a width of the annular portion 23a.

As shown in Fig. 9 and Fig. 12(A), 27 indicates a third current-carrying member formed of an annular portion 27a and a plurality of rectangular portions 27b. Each rectangular portion 27b is folded in a perpendicular direction to the annular portion 27a at a position which is apart from the inside of the annular portion 27a by a prescribed length. As shown in Fig. 12(B), the annular portion 27a is formed by preparing a plate-shaped member 28, which is composed of a plurality of arcuate portions 28b connected with each other through thin-walled portions 28a and a plurality of rectangular portions 28c respectively protruded from the inside of the corresponding arcuate portion 28b, and by bending the thin-walled portions 28a of the arcuate portions 28b so as to arrange the arcuate portions 28b in an annular shape. A radius of curvature in each arcuate portion 28b is longer than that of the arcuate portion 26b of the second current-carrying member 25 by a prescribed length. Each rectangular portion 28c is longer than the rectangular portion 26c of the second current-carrying member 25 and is protruded by a prescribed length longer than that in the protrusion of the rectangular portion 26c. Each rectangular portion 27b is formed by sinking the corresponding rectangular portion 28c from the corresponding arcuate portion 28b downward by a thickness of the annular portion 25a of the second current-carrying member 25 and by folding the rectangular portion 28c in a perpendicular direction to the arcuate portion 28b at a position which is apart from the inside of the arcuate portion 28b by a sum of a width of the annular portion 23a and a width of the annular portion 25a.

Thereafter, as shown in Fig. 9, the first, second and third current-carrying members 23, 25 and 27 are tightly fitted to each other in that order so as to arrange the annular portions 23a, 25a and 27a on the same plane, resin is arranged between the first, second and third current-carrying members 23, 25 and 27 to electrically isolate the first, second and third current-carrying members 23, 25 and 27 from each other and to fix the first, second and third current-carrying members 23, 25 and 27 to each other as a unit (not shown). Thereafter, surfaces of the first, second and third current-carrying members 23, 25 and 27 arranged on the same plane are ground, and outer circumferential surfaces of the rectangular portions 23b, 25b and 27b arranged on the same circle-circumference are ground. Therefore, a plurality of slip rings are formed by the annular portions 23a, 25a and 27a, and a commutator is formed by the rectangular portions 23b, 25b and 27b. That is, the manufacturing of a current-carrying unit 29 having the slip rings and the commutator is completed.

As is described above, in the third embodiment, as shown in Fig. 10, Fig. 11 and Fig. 12, each of the first, second and third current-carrying members 23, 25 and 27 is formed of a plate-shaped member, the first, second and third current-carrying members 23, 25 and 27 are tightly fitted to each other (shown in Fig. 9), a plurality of slip rings are formed by the annular portions 23a, 25a and 27a, and a commutator is formed by the rectangular portions 23b, 25b and 27b. Accordingly, the reliability of the current-carrying apparatus can be improved in the same manner as in the first and second embodiments. Also, because grinding work required for the manufacturing of the current-carrying unit 29 is reduced, a manufacturing cost can be reduced. Also, because connection work between the group of slip rings and the group of commutator pieces is not required, working efficiency of the wiring can be furthermore improved.

In this embodiment, each of the plate-shaped members 24, 26 and 28 is formed out of a plate material in a shape shown in Fig. 10, Fig. 11 or Fig. 12. However, as shown in Fig. 13, it is applicable that each of the rectangular portions 24c, 26c and 28c respectively indicated by a dot-dash-line be formed by forming a protruding portion 24d, 26d or 28d having a wide width on the inside of the arcuate portion 24b, 26b or 28b and by rolling the protruding portion 24d, 26d or 28d. In this case, the yield of the plate material can be improved.

### EMBODIMENT 4

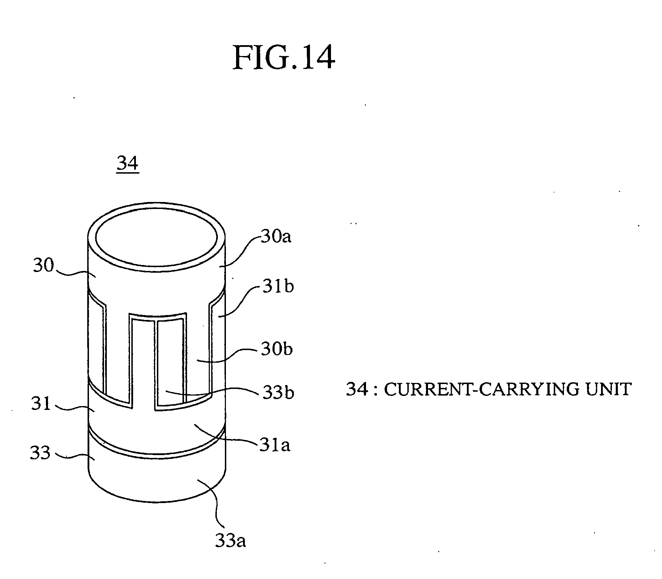

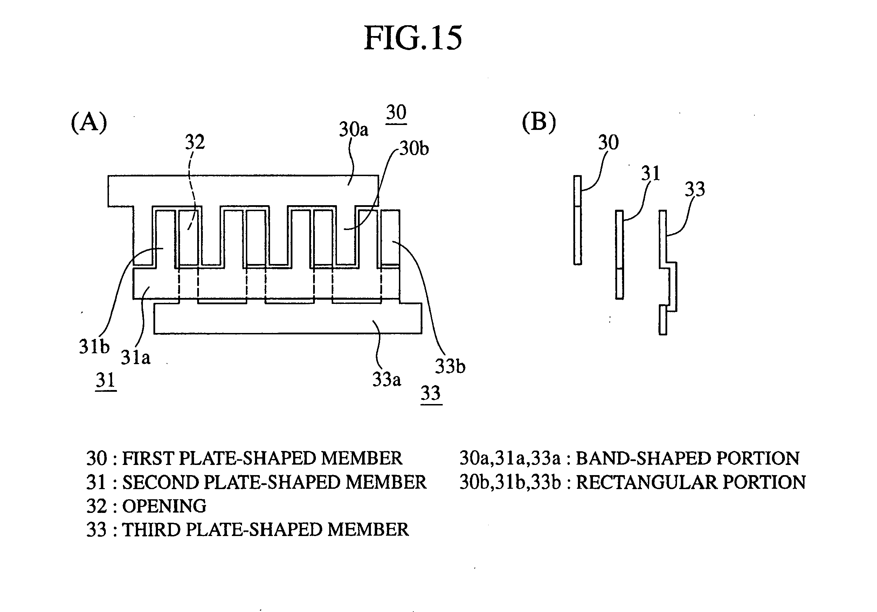

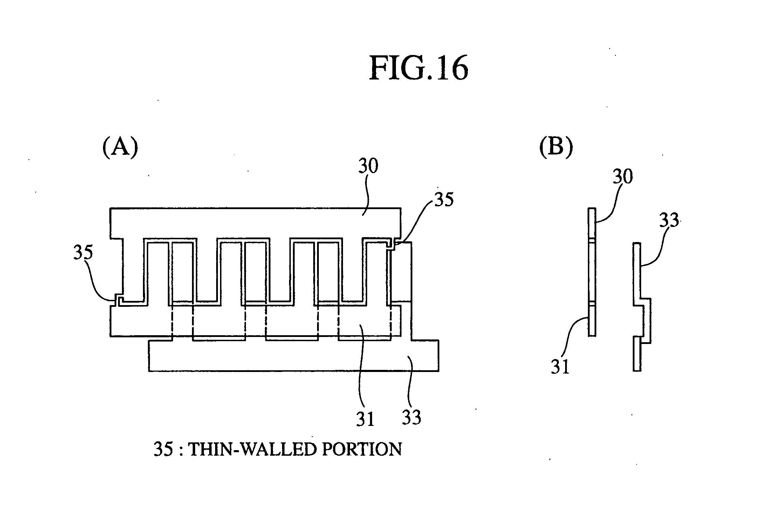

Fig. 14 is a diagonal view showing the configuration of a current-carrying unit of a current-carrying apparatus for a direct-current motor according to a fourth embodiment of the present invention. Fig. 15 is an expansion view showing the current-carrying unit shown in Fig. 14, (A) is a plan view, and (B) is a side view. Fig. 16 is an expansion view showing a current-carrying unit of which the configuration is different from that of the current-carrying unit shown in Fig. 14, (A) is a plan view, and (B) is a side view.

In Fig. 14 and Fig. 15, 30 indicates a first plate-shaped member in which a plurality of rectangular portions 30b are protruded at regular intervals from one side of a band-shaped portion 30a. 31 indicates a second plate-shaped member in which a plurality of rectangular portions 31b are protruded at regular intervals from one side of a band-shaped portion 31a. One side of each rectangular portion 31b faces one side of one adjacent rectangular portion 30b of the first plate-shaped member 30, and the other side of the rectangular portion 31b faces the other adjacent rectangular portion 30b of the first plate-shaped member 30 through an opening 32 having a prescribed width. 33 indicates a third plate-shaped member in which a plurality of rectangular portions 33b are protruded at regular intervals from one side of a band-shaped portion 33a. The side of the band-shaped portion 33a faces the other side of the band-shaped portion 31a of the second plate-shaped member 31. Each rectangular portion 33b is bent in a U-shaped form so as to extend along the reverse surface of the band-shaped portion 31a of the second plate-shaped member 31, and the top portion of each rectangular portion 33b is arranged in the corresponding opening 32.

As shown in Fig. 14, the group of first, second and third plate-shaped members 30, 31 and 33 is cylindrically formed, and resin is arranged between the first, second and third plate-shaped members 30, 31 and 33 so as to insulate the first, second and third plate-shaped members 30, 31 and 33 from each other and to fix the first, second and third plate-shaped members 30, 31 and 33 as a unit. Thereafter, an outer circumference surface of the group of first, second and third plate-shaped members 30, 31 and 33 is ground. Therefore, a plurality of slip rings are formed by the band-shaped portions 30a, 31a and 33a, a commutator is formed by the rectangular portions 30b, 31b and 33b, and the manufacturing of a current-carrying unit 34 composed of the slip rings and the commutator is completed.

As is described above, in the fourth embodiment, as shown in Fig. 15, the first, second and third plate-shaped members 30, 31 and 33 are formed and arranged. Also, as shown in Fig. 14, the group of first, second and third plate-shaped members 30, 31 and 33 is cylindrically formed as a unit, a plurality of slip rings are formed by the band-shaped portions 30a, 31a and 33a, and a commutator is formed by the rectangular portions 30b, 31b and 33b. Accordingly, the reliability of the current-carrying apparatus can be improved. Also, because grinding work required for the manufacturing of the current-carrying unit 34 is reduced in the same manner as in the third embodiment, manufacturing costs can be reduced. Also, because connection work between the group of slip rings and the group of commutator pieces is not required, the working efficiency of the wiring can be furthermore improved.

Here, as shown in Fig. 16, as an example, in cases where the first and second plate-shaped members 30 and 31 connected with each other through thin-walled portions 35 are integrally formed, processing steps for press working of the current-carrying unit 34 can be reduced, and manufacturing costs of the current-carrying apparatus can be reduced.

### EMBODIMENT 5

Fig. 17 is an expansion view showing the configuration of a current-carrying unit of a current-carrying apparatus for a direct-current motor according to a fifth embodiment of the present invention, (A) is a plan view, and (B) is a side view.

In Fig. 17, 36 indicates a first plate-shaped member. A plurality of windows 36a respectively having the same prescribed window width are formed in the first plate-shaped member 36 at prescribed intervals which are almost equal to two times of the window width, and a groove 36b is formed between each pair of windows 36a adjacent to each other on the reverse surface of the first plate-shaped member 36. Each groove 36b extends straight from the bottom side of one window 36a toward the bottom side of the other window 36a, turns upward (in Fig. 17) at a mid point between the bottom sides of the windows 36a, extends straight and turns at a mid point between the top sides of the windows 36a toward the top side of the other window 36a and extends straight to the top side of the other window 36a. 37 indicates a second plate-shaped member in which a plurality of rectangular portions 37b are protruded from one side of a band-shaped portion 37a at the same prescribed intervals as those of the windows 36a of the first plate-shaped member 36. The side of the band-shaped portion 37a faces one side of the first plate-shaped member 36, each rectangular portion 37b is bent in a U-shaped form so as to extend along the reverse surface of the first plate-shaped member 36, and the top portion of each rectangular portion 37b is placed in the corresponding window 36a.

Thereafter, the group of first and second plate-shaped members 36 and 37 is cylindrically formed in the same manner in the fourth embodiment shown in Fig. 14, and resin is arranged between the first and second plate-shaped members 36 and 37 so as to insulate the first and second plate-shaped members 36 and 37 from each other and to fix the first and second plate-shaped members 36 and 37 as a unit. Thereafter, an outer circumference surface of the group of first and second plate-shaped members 36 and 37 is ground until the grooves 36b are exposed to the outer circumference surface. Therefore, the first plate-shaped member 36 is divided into two divided members, which have the same shape as those of the first and second plate-shaped members 30 and 31 in the fourth embodiment, through the grooves 36b, a plurality of slip rings are formed by two band-shaped portions of the two divided members and the band-shaped portion 37a of the second plate-shaped member 37, a commutator is formed by rectangular portions of the two divided members and the rectangular portions 37b of the second plate-shaped member 37, and the manufacturing of a current-carrying unit (not shown) composed of the slip rings and the commutator is completed.

As is described above, in the fifth embodiment, as shown in Fig. 17, the first and second plate-shaped members 36 and 37 are formed and arranged, the first and second plate-shaped members 36 and 37 are integrally formed in a cylinder shape as a unit, and the outer circumference surface of the group of first and second plate-shaped members 36 and 37 is ground until the grooves 36b are exposed to the outer circumference surface. Therefore, the first plate-shaped member 36 is divided into two divided members, and the current-carrying unit, which is substantially the same as that of the fourth embodiment, is formed. Accordingly, the same effect as that described in the fourth embodiment can be obtained. Also, because the current-carrying unit can be obtained from the first and second plate-shaped members 36 and 37, processing steps for the pressing working of the current-carrying unit can be reduced, and manufacturing costs of the current-carrying apparatus can be reduced.

### EMBODIMENT 6

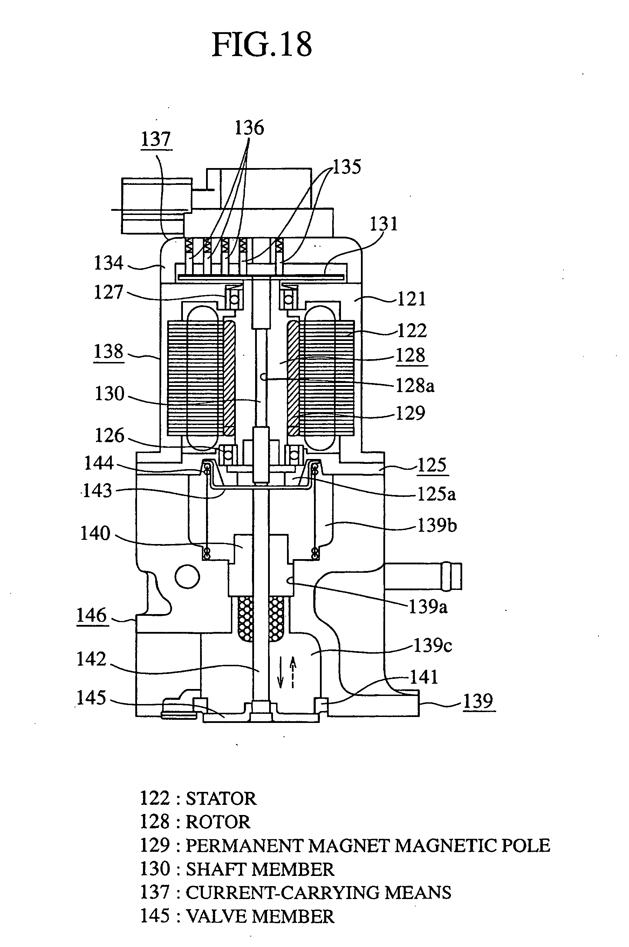

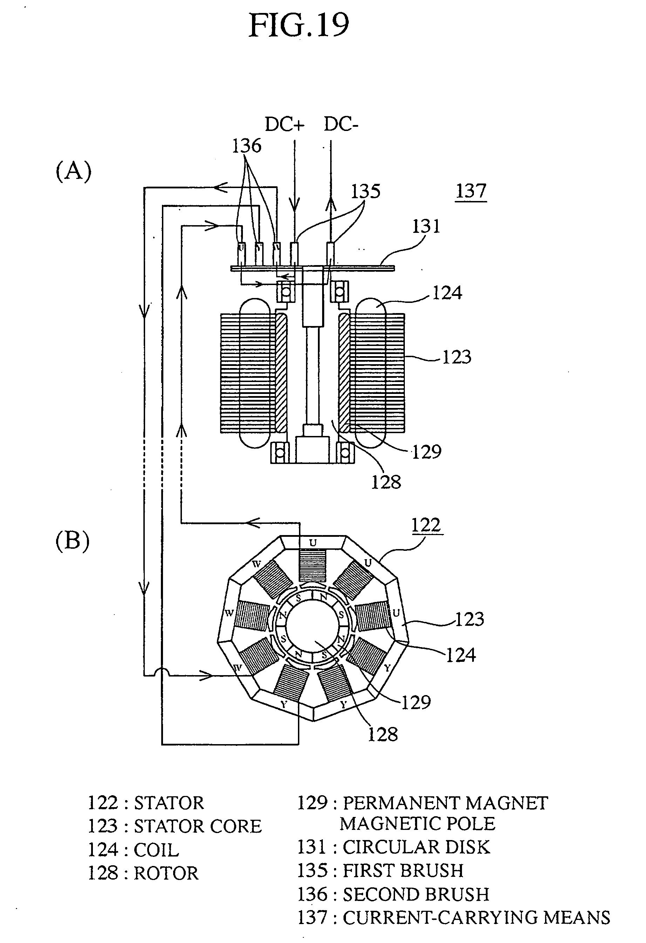

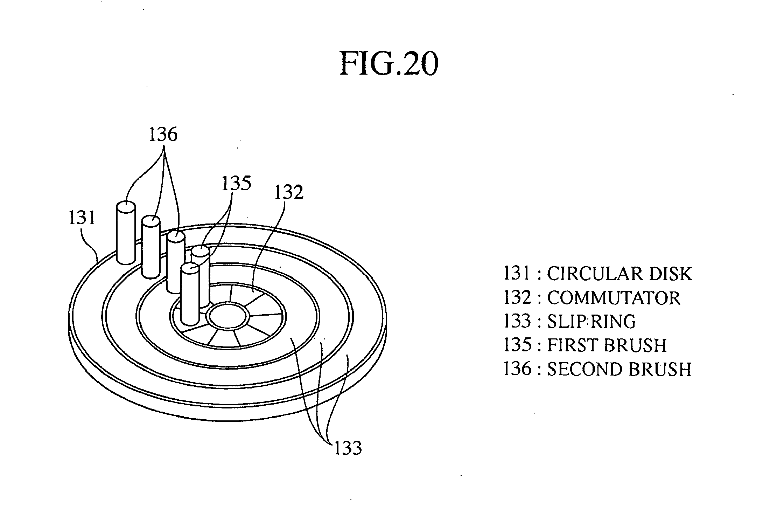

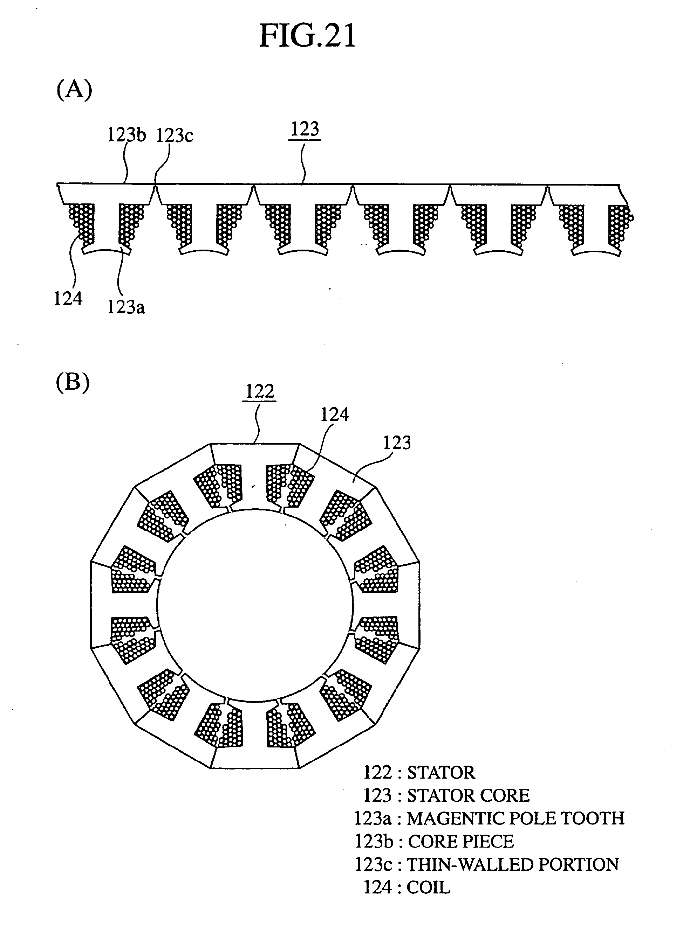

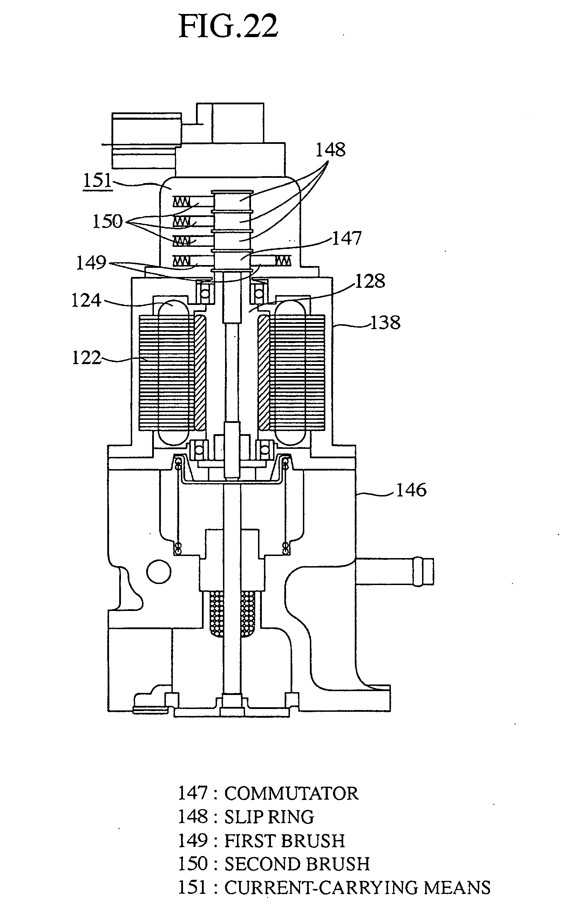

Fig. 18 is a cross sectional view showing the configuration of a valve apparatus using a current-carrying apparatus for a direct-current motor according to a sixth embodiment of the present invention. Fig. 19 shows a flow of an electric current in a motor unit of the current-carrying apparatus shown in Fig. 18, (A) is a cross sectional view of the motor unit, and (B) is a plan view of the motor unit. Fig. 20 is a diagonal view showing the configuration of a current-carrying means of the motor unit shown in Fig. 19. Fig. 21 is a plan view of a stator of the motor unit of the valve apparatus shown in Fig. 18 and shows a manufacturing method of the stator. Fig. 22 is a cross sectional view showing the configuration of a valve apparatus which is different from that shown in Fig. 18 according to the sixth embodiment of the present invention.

In Fig. 18, 121 indicates a motor unit case which is formed of resin material. 122 indicates a stator which is integrally formed with the motor unit case 121 by using a resin mold. As shown in Fig. 21(A), each of a plurality of magnetic pole teeth 123a of a stator core 123 is protruded from a core piece 123b, each of a plurality of magnetic materials is formed by connecting the plurality of core pieces 123b with each other through thin-walled portions 123c of the core pieces 123b, a prescribed number of magnetic materials are arranged in layers to form a plurality of stator cores 123, each stator core 123 is maintained to this condition to heighten a winding performance of the stator core 123, and coils 124 are wound on the magnetic pole teeth 123a of each stator core 123 by using a winding machine (not shown). Thereafter, as shown in Fig. 21(B), the thin-walled portions 123c of each stator core 123 are folded so as to form a stator 122 in a cylinder shape.

125 indicates a flange member attached to one end of the motor unit case 121, and a boss portion 125a for supporting a bearing 126 is formed in the central portion of the flange member 125. 127 indicates a bearing which is supported by the other side of the motor unit case 121, and the bearing 127 is arranged coaxially with the bearing 126. 128 indicates a rotor of which both ends are supported by the bearings 126 and 127 respectively, a plurality of permanent magnet magnetic poles 129 are arranged in the outer circumferential area of the rotor 128 to be placed at positions corresponding to positions of the coils 124 of the stator 122, and a screw hole 128a penetrates through the center area of the rotor 128. 130 indicates a shaft member which is screwed to the rotor 128 so as to be arranged in the screw hole 128a and is movable in an axial direction of the shaft member 130 according to the rotation of the rotor 128.

131 indicates a circular disk which is fixedly attached to one end of the rotor 128 so as to be rotated with the rotor 128. As shown in Fig. 20, 132 indicates a commutator which is formed by dividing a central annular portion of the circular disk 131 into a plurality of divided portions arranged in a circle-circumferential direction of the central annular portion. 133 indicates a plurality of slip rings which are formed by dividing a portion of the circular disk 131 placed on the outer circumference side of the commutator 132 into N portions (three portions in Fig. 20) concentrically and annularly arranged. 134 indicates a bracket attached to the other end of the motor unit case 121. 135 indicates a pair of first brushes of which ends are supported by the bracket 134 so as to be insulated from the bracket 134. The other end of each first brush 135 comes in contact with each divided portion of the commutator 132 under a prescribed pressure so as to be able to slide on the divided portion. 136 indicates three second brushes which are supported by the bracket 134 so as to be insulated from the bracket 134. The top end of each second brush 136 comes in contact with the corresponding slip ring 133 under a prescribed pressure so as to be able to slide on the slip ring 133. A current-carrying unit means 137 is composed of the circular disk 131, the commutator 132, the slip rings 133, the bracket 134, the first brushes 135 and the second brushes 136. A motor unit 138 is composed of the motor unit case 121, the stator 122, the coils 124, the flange member 125, the bearings 126 and 127, the rotor 128, the permanent magnet magnetic poles 129, the shaft member 130 and the current-carrying unit means 137.

139 indicates a valve case which is connected with the other end of the motor unit case 121 through the flange member 125 and is, for example, formed of aluminum die-cast or the like. A penetrating hole 139a is formed in the center of the valve case 139, a vessel 139b and a vessel 139c are arranged on both sides of the penetrating hole 139a respectively, and the vessel 139c leads to an exhaust passage (not shown). 140 indicates a guide bush arranged so as to close the penetrating hole 139a of the valve case 139. 141 indicates a seal member arranged in an opening of the vessel 139c. 142 indicates a valve driving shaft which penetrates through the guide bush 140 in a gas tight condition and is able to slide in the guide bush 140. 143 indicates a dish-shaped member which is fixedly attached to one end of the valve driving shaft 142 and is arranged in the vessel 139b. 144 indicates a spring which presses an outer portion of the dish-shaped member 143 against the motor unit 138 by a prescribed power. 145 indicates a valve member which is attached to the other end of the valve driving shaft 142. When the valve member 145 is attached to the seal member 141, a connecting passage between the vessel 139c leading to the exhaust passage (not shown) and an intake passage (not shown) is closed. When the valve member 145 is detached from the seal member 141, the connecting passage is opened. A valve unit 146 is composed of the valve case 139, the guide bush 140, the seal member 141, the valve driving shaft 142, the dish-shaped member 143, the spring 144 and the valve member 145.

Next, an operation of the valve apparatus having the above-described configuration according to the sixth embodiment is described.

Initially, when a direct current supplied from an electric power source (not shown) flows into the current-carrying unit means 137 through one first brush 135, as shown in Fig. 19 and Fig. 20, the direct current is commutated in the commutator 132 and flows into one slip ring 133. Thereafter, the commutated current is supplied to the stator 122 through one second brush 136 and flows into one coil 124. Thereafter, the commutated current flows into another second brush 136, another slip ring 133 and the commutator 132 in that order and flows out to the electric power source through the other first brush 135.

Therefore, a rotation power is generated in the rotor 128 according to an interaction between a magnetic flux generated in the coil 124, in which the electric current flows, and the permanent magnet magnetic poles 129 of the rotor 8. Thereafter, the circular disk 131 is rotated with the rotor 128 by the rotation power. Therefore, because the combination of the first brush 135 and the commutator 132 contacting with the first brush 135 is changed, the coil 124, in which the electric current flows, is changed to another one each time the combination of the first brush 135 and the commutator 132 is changed. Therefore, the rotor 128 is continuously rotated. Thereafter, the shaft member 130, which is screwed to the rotor 128 to be arranged in the screw hole 128a of the rotor 128, is moved toward the valve member 146, the top portion of the shaft member 130 pushes the dish-shaped member 143, the shaft member 130 is still moved toward the valve member 146 while overcoming the prescribed power of the spring 144, and the valve driving shaft 142, of which one end is fixedly attached to the dish-shaped member 143, slides in the guide bush 140 according to the movement of the shaft member 130 and moves in a direction indicated by a solid-line arrow in Fig. 18. Therefore, the valve member 145, which is attached to the other end of the valve driving shaft 142, is detached from the seal member 141 to open a connecting passage between the vessel 139c and an intake passage (not shown), and an exhaust gas is recirculated in the intake passage (not shown).

In contrast, in cases where the connecting passage between the vessel 139c and the intake passage (not shown) is closed, a direct current flows into the current-carrying unit means 137 through the other first brush 135 to inversely rotate the rotor 128, and the shaft member 130 is moved in the direction in which the shaft member 130 is moved far from the valve unit 146. Therefore, the dish-shaped member 143 is moved with the valve driving shaft 142 by the prescribed power of the spring 144 in a direction indicated by a dotted-line arrow in Fig. 18 while the dish-shaped member 143 comes in contact with the top end of the shaft member 130, and the dish-shaped member 143 is stopped when the valve member 145 reaches a position at which the valve member 145 comes in contact with the seal member 141. That is, when the valve member 145 is set to a positional condition shown in Fig. 18, the dish-shaped member 143 is stopped. Thereafter, even though the shaft member 130 is still moved so as to be detached from the dish-shaped member 143, the valve member 145 maintains a superior contact with the seal member 141 according to the prescribed power of the spring 144.

As is described above, in the sixth embodiment, the coils 124 are arranged in the stator 122, the permanent magnet magnetic poles 129 are arranged in the rotor 128, a direct current supplied from an electric power supply source flows into the commutator 132 through one first brush 135 and is commutated to a plurality of commutated currents in the commutator 132 one after another, each commutated current is carried to the corresponding coil 124 through the corresponding slip ring 133 and the corresponding second brush 136 to rotate the rotor 128, the shaft member 130 is moved in its axial direction according to the rotation of the rotor 128, and the valve member 145 is opened or closed through the valve driving shaft 142 according to the movement of the shaft member 130. Accordingly, a diameter of the rotor 128 can be shortened, a moment of inertia in the rotor 128 can be lowered, and a valve apparatus, in which the response performance for the valve open-close operation is superior, can be obtained.

Also, the current-carrying unit means 137 is arranged on one side of both the stator 122 and the rotor 128 in the axial direction while the valve member 145 is arranged on the other side of both the stator 122 and the rotor 128. Accordingly, the influence of the heat generated in the current-carrying unit means 137 on the valve unit 146 can be prevented, and the reliability of the valve apparatus can be improved.

Also, the coil 124 is wound on each of the magnetic pole teeth 123a of each stator core 123 in which the plurality of core pieces 123b are connected with each other through the thin-walled portions 123c in a band shape, the thin-walled portions 123c of each stator core 123 are bent to cylindrically form the stator core 123 and to obtain the stator 122. Accordingly, the winding operation can be easily performed, and an assembly operation efficiency can be improved.

Also, the commutator 132 is formed by dividing a central ring portion of the circular disk 131 into a plurality of divided portions arranged in a circle-circumferential direction of the central ring portion, a plurality of slip rings 133 are formed by dividing a portion of the circular disk 131, which is placed on the outer circumference side of the commutator 132, into a plurality of portions concentrically and annularly arranged. Accordingly, as shown in Fig. 22 as an example, in comparison with a current-carrying means 151 in which a commutator 147 and a plurality of slip rings 148 are arranged coaxially with the rotor 128 to make a direct current supplied from an electric power supply source flow into the commutator 147 through a first brush 149, to make the direct current be commutated into a plurality of commutated currents in the commutator 147 one after another and to carry each commutated current to the corresponding coil 124 of the stator 122 through the corresponding slip ring 148 and a second brush 150, the length of the valve apparatus in the axial direction of the rotor 128 can be considerably shortened, and a small-sized valve apparatus can be obtained.

### INDUSTRIAL APPLICABILITY

As is described above, a current-carrying apparatus for a direct-current motor according to the present invention is particularly appropriate to an apparatus in which a direct current supplied from an electric power supply source is commutated into a plurality of commutated currents in a commutator one after another , each commutated current is carried to a corresponding coil of a stator through a corresponding slip ring.

Also, a valve apparatus using a current-carrying apparatus for a direct-current motor according to the present invention is particularly appropriate to a circulation control of exhaust gas in an exhaust gas recirculation (EGR) apparatus in which a part of exhaust gas output from an engine of a motor vehicle is, for example, recirculated in an intake system to obtain a superior fuel consumption rate while the generation of inert gas is suppressed.

## Claims

1. A current-carrying apparatus for a direct-current motor, comprising:
a commutator (11, 19), which has a plurality of commutator pieces (11a, 19a) arranged in a circle-circumferential direction of the commutator (11, 19) for commutating a direct current, which is supplied from an electric power source through a first brush (14, 20), to provide N commutated currents having phases which differ from each other, one after another, N being an integral number higher than 1; and
N slip rings (12, 18), which are separated from each other in an annulus ring shape and concentrically arranged in a circumferential area of the commutator (11, 19) and are respectively and electrically connected with one commutator piece (11a, 19a) of the
commutator (11, 19), for respectively carrying one of the commutated
currents obtained in the commutator (11, 19) to a corresponding coil (4) of a stator (2) through a second brush (15, 21),
**characterized in that** a slip ring (12, 18) and the respective commutator pieces (11a, 19a) are integrally formed.

2. A current-carrying apparatus for a direct-current motor according to claim 1, wherein the N slip rings are formed by dividing a circular disk into N divided portions which are respectively formed in the annulus ring shape so as to be concentrically arranged, and the commutator is formed by dividing a cylindrical member, which is protruded from the center of the circular disk, into a plurality of commutator pieces (19a) which are arranged in a circle-circumferential direction of the cylindrical member.

3. A current-carrying apparatus for a direct-current motor according to claim 2, wherein a connection piece (19b) is formed in a bottom portion of each of the commutator pieces of the commutator, each connection piece is folded so as to extend along reverse surfaces of the slip rings (18) and to be electrically connected with the corresponding slip ring.

4. A current-carrying apparatus for a direct-current motor according to claim 1, wherein the slip rings are formed of N annular members (23a; 25a; 27a) which are tightly fitted to each other in a radial direction of the annular members, and the commutator is formed of a large number of commutator pieces (23b; 25b; 27b) which are composed of a plurality of connection portions (24c; 26c; 28c) of different lengths which extend from the inside of the annular members, are folded in a perpendicular direction to the annular members and are cylindrically arranged on a condition that the annular members are tightly fitted to each other.

5. A current-carrying apparatus for a direct-current motor according to claim 4, wherein the commutator and the slip rings are formed of a plurality of arcuate portions (24b; 26b; 28b) and a plurality of rectangular portions (24c; 26c; 28c) respectively protruded from the corresponding arcuate portion, the arcuate portions are connected with each other through thin-walled portions (24a; 26a; 28a), the annular members are formed of the arcuate portions which are annularly arranged by bending the thin-walled portions of the arcuate portions, each of the rectangular portions is formed according to a rolling operation, and the commutator pieces of the commutator are formed of the rectangular portions each of which is folded in a perpendicular direction to the corresponding arcuate portion at a position which is apart from the arcuate portion by a prescribed length.

6. A current-carrying apparatus for a direct-current motor, comprising:
a commutator (30, 31, 33) which has a plurality of commutator pieces (30b, 31b, 33b) arranged in a circle-circumferential direction of the commutator (30, 31, 33), for commutating a direct current, which is supplied from an electric power source through a first brush (20), to provide N commutated currents having phases which differ from each other, one after another, N being an integral number higher than 1; and
N slip rings (30a, 31a, 33a) which are separated from each other in an axial direction of the commutator (30, 31, 33) in an annular shape, coaxially arranged and are respectively and electrically connected with one commutator piece (30b, 31b, 33b) of the commutator (30, 31, 33), for respectively carrying one of the commutated currents obtained in the commutator (30, 31, 33) to a corresponding coil (4) of a stator (2) through a second brush (21) **characterized in that** a slip ring (30a, 31a, 33a) and the respective commutator pieces (30b, 31b, 33b) are integrally formed.

7. A current-carrying apparatus for a direct-current motor according to claim 6, wherein the commutator and the slip rings are formed by annularly arranging a first plate-shaped member (30), a second plate-shaped member (31) and a third plate-shaped member (33), the first plate-shaped member is composed of a band-shaped portion (30a) and a plurality of rectangular portions (30b) protruded at regular intervals from one side of the band-shaped portion, the second plate-shaped member is composed of a band-shaped portion (31a) and a plurality of rectangular portions (31b) protruded at the regular intervals from one side of the band-shaped portion, the first plate-shaped member and the second plate-shaped member are integrally formed through a thin-walled connecting portion (35), one side of each rectangular portion of the second plate-shaped member faces one side of one rectangular portion of the first plate-shaped member, and the other side of the rectangular portion of the second plate-shaped member faces another rectangular portion of the first plate-shaped member through an opening (32) having a prescribed width, the third plate-shaped member is composed of a band-shaped portion (33a) and a plurality of rectangular portions (33b) protruded at the regular intervals from one side of the band-shaped portion, the side of the band-shaped portion is the third plate-shaped member faces the other side of the band-shaped portion of the second plate-shaped member, each rectangular portion of the third plate-shaped member extends along a reverse surface of the band-shaped portion of the second plate-shaped member, and a top portion of each rectangular portion of the third plate-shaped member is arranged in the corresponding opening which is placed on the other side of the corresponding rectangular portion of the second plate-shaped member.

8. A current-carrying apparatus for a direct-current motor according to claim 6, wherein the commutator and the slip rings are formed by annularly arranging a first plate-shaped member (36) and a second plate-shaped member (37), a plurality of windows (36a) respectively having the same prescribed window width are formed in the first plate-shaped member at prescribed intervals which are almost equal to two times of the window width, a groove (36b) is formed between each pair of windows adjacent to each other on a reverse surface of the first plate-shaped member so as to extend straight from a bottom side of one window toward a bottom side of the other window, to turn upward at a mid point between the bottom sides of the windows, to extend straight and to turn and extend straight to a top side of the other window, the second plate-shaped member is composed of a band-shaped portion (37a) and a plurality of rectangular portions (37b) protruded from one side of the band-shaped portion at the same prescribed intervals as those of the windows of the first plate-shaped member, the side of the band-shaped portion of the second plate-shaped member faces one side of the first plate-shaped member, each rectangular portion of the second plate-shaped member extends along a reverse surface of the first plate-shaped member, and a top portion of each rectangular portion of the second plate-shaped member is placed in the corresponding window.

9. A valve apparatus including a current-carrying apparatus according to claims 1 to 5 for a direct-current motor, comprising:
a stator (122) in which a prescribed number of coils (24) are arranged at almost equal intervals in a circle-circumferential direction of each of a plurality of stator cores (123);
a rotor (128) in which a plurality of permanent magnet magnetic poles (129= are arranged on an outer circumferential surface of the rotor so as to place each permanent magnet pole at a position corresponding to that of the corresponding coil of the stator;
current-carrying means (137) for commutating a direct current, which is supplied from an electric power source through the rotor, to a commutated current by using the rotor and for carrying the commutated current to each coil of the stator,
a shaft member (130), which is arranged in a center of the rotor and is movable in an axial direction of the shaft member according to the rotation of the rotor; and
a valve member (145) for performing an open operation and a close operation according the movement of the shaft member.

10. A valve apparatus according to claim 9, wherein the current-carrying means is integrally molded with the permanent magnet magnetic poles of the rotor by using resin.

## Patentansprüche

1. Stromführende Vorrichtung für einen Gleichstrommotor, umfassend:
einen Polwender (11, 19), der eine Vielzahl von Polwenderteilen (11a, 19a) aufweist, die in einer Kreisumfangsrichtung des Polwenders (11, 19) zum Umschalten eines Gleichstroms angeordnet sind, der von einer elektrischen Energiequelle durch eine erste Bürste (14, 20) versorgt wird, so dass N umgeschaltete Ströme, die voneinander abweichende Phasen aufweisen, nacheinander bereitgestellt werden, wobei N eine ganze Zahl größer als 1 ist; und
N Gleitringe (12, 18), die voneinander in einem ringförmigen Kranz getrennt und in einem Umfangsbereich des Polwenders (11, 19) konzentrisch angeordnet sind und die jeweils elektrisch mit einem Polwenderteil (11a, 19a) des Polwenders (11, 19) verbunden sind, zum jeweiligen Führen eines der umgewandelten Ströme, die in dem Polwender (11, 19) erhalten werden, zu einer entsprechenden Spule (4) eines Stators (2) durch eine zweite Bürste (15, 21),
**dadurch gekennzeichnet, dass**
ein Gleitring (12, 18) und die jeweiligen Polwenderteile (11a, 19a) einstückig ausgebildet sind.

2. Stromführende Vorrichtung für einen Gleichstrommotor nach Anspruch 1, bei der die N Gleitringe durch Teilen einer kreisrunden Scheibe in N geteilte Abschnitte ausgebildet werden, so dass sie konzentrisch angeordnet sind, und der Polwender durch Teilen eines Zylinderelements ausgebildet ist, welches vom Zentrum der kreisrunden Scheibe hervorsteht, in eine Vielzahl Polwenderteilen (19a), welche in einer Kreisumfangsrichtung des Zylindrischen Elements angeordnet sind.

3. Stromführende Vorrichtung für einen Gleichstrommotor nach Anspruch 2, bei der ein Verbindungsteil (19b) in einem Bodenabschnitt jedes Polwenderteils des Polwenders ausgebildet ist, wobei jedes Verbindungsstück so gefaltet ist, dass es sich entlang rückwärtigen Oberflächen der Gleitringe (18) erstreckt und mit dem jeweiligen Gleitring elektrisch verbunden ist.

4. Stromführende Vorrichtung für einen Gleichstrommotor nach Anspruch 1, bei der die Gleitringe aus N Kranzelementen (23a; 25a; 27a;) ausgebildet sind, welche fest aneinander in einer radialen Richtung der Kranzelemente befestigt sind, und der Polwender aus einer großen Anzahl von Polwenderstücken (23b; 25b; 27b;) ausgebildet ist, welche aus einer Vielzahl von Verbindungsabschnitten (24c; 26c; 28c;) von unterschiedlicher Länge zusammengestellt sind, die sich von der Innenseite der Kranzelemente erstrecken, in einer rechtwinkligen Richtung zu den Kranzelementen gefaltet sind und die unter der Bedingung zylindrisch angeordnet sind, dass die Kranzelemente fest aneinander befestigt sind.

5. Stromführende Vorrichtung für einen Gleichstrommotor nach Anspruch 4, bei der der Polwender und die Gleitringe aus einer Vielzahl von gekrümmten Abschnitten (24b; 26b; 28b) und einer Vielzahl von rechteckförmigen Vorsprüngen (24c; 26c; 28c) ausgebildet sind, die jeweils von den entsprechenden gekrümmten Abschnitten hervorstehen, wobei die gekrümmten Abschnitte miteinander durch dünnwandige Abschnitte (24a; 26a; 28a) verbunden sind, wobei die Kranzelemente aus den gekrümmten Abschnitten ausgebildet sind, welche durch Biegen der dünnwandigen Abschnitte der gekrümmten Abschnitte kranzförmig angeordnet sind, wobei jeder der rechteckförmigen Abschnitte gemäß einer Walzoperation ausgebildet ist, und die Polwenderteile des Polwenders aus den rechteckförmigen Abschnitten ausgebildet sind, von denen jeder in einer rechtwinkligen Richtung zu dem entsprechenden gekrümmten Abschnitt in eine Position gefaltet ist, welche durch eine vorgeschriebene Länge von dem gekrümmten Abschnitt entfernt ist.

6. Stromführende Vorrichtung für einen Gleichstrommotor, umfassend:
einen Polwender (30, 31, 33), der eine Vielzahl von Polwenderteilen (30b, 31b, 33b) aufweist, die in einer Kreisumfangsrichtung des Polwenders (30, 31, 33) zum Umschalten eines Gleichstroms angeordnet sind, der von einer elektrischen Energiequelle durch eine erste Bürste (20) versorgt wird, so dass N umgeschaltete Ströme, die voneinander abweichende Phasen aufweisen, nacheinander bereitgestellt werden, wobei N eine ganze Zahl größer als 1 ist; und
N Gleitringe (30a, 31a, 33a), die voneinander in axialer Richtung des Polwenders (30, 31, 33) in einer kranzförmigen Gestalt getrennt, koaxial angeordnet und jeweils elektrisch mit einem Polwenderteil (30b, 31b, 33b) des Polwenders (30, 31, 33) verbunden sind, zum jeweiligen Führen eines der umgewandelten Ströme, die in dem Polwender (11, 19) erhalten werden, zu einer entsprechenden Spule (4) eines Stators (2) durch eine zweite Bürste (21),
**dadurch gekennzeichnet, dass**
ein Gleitring (30a, 31a, 33a) und das jeweilige Polwenderstück (30b, 31b, 33b) einstückig ausgebildet sind.

7. Stromführende Vorrichtung für einen Gleichstrommotor nach Anspruch 6, bei der der Polwender und die Gleitringe durch kranzförmiges Anordnen eines ersten plattenförmigen Elements (30), eines zweiten plattenförmigen Elements (31) und eines dritten plattenförmigen Elements (33) ausgebildet sind, wobei das erste plattenförmige Element (30) aus einem bandförmigen Abschnitt (30a) und einer Vielzahl von rechteckförmigen Abschnitten (30b) aufgebaut ist, die in regelmäßigen Abständen von einer Seite des bandförmigen Abschnitts hervorstehen, das zweite plattenförmigen Element aus einem bandförmigen Abschnitt (31a) und einer Vielzahl von rechteckförmigen Abschnitten (31b) aufgebaut ist, die in regelmäßigen Abständen von einer Seite des bandförmigen Abschnitts hervorstehen, wobei das erste plattenförmige Element und das zweite plattenförmige Element durch einen dünnwandigen Verbindungsabschnitt (35) einstückig ausgebildet sind, wobei eine Seite von jedem rechteckförmigen Abschnitt des zweiten plattenförmigen Elements auf eine Seite eines rechteckförmigen Abschnitts des ersten plattenförmigen Elements gerichtet ist, und die andere Seite des rechteckförmigen Abschnitts des zweiten plattenförmigen Elements auf einen anderen rechteckförmigen Abschnitt des ersten plattenförmigen Elements durch eine Öffnung (32) gerichtet ist, die eine vorgeschriebene Breite aufweist, wobei das dritte plattenförmigen Element aus einem bandförmigen Abschnitt (33a) und einer Vielzahl von rechteckförmigen Abschnitten (33b) aufgebaut ist, die in regelmäßigen Abständen von einer Seite des bandförmigen Abschnitts hervorstehen, wobei die Seite des bandförmigen Abschnitts des dritten plattenförmigen Elements auf die andere Seite des bandförmigen Abschnitts des zweiten plattenförmigen Elements gerichtet ist, wobei sich jeder rechteckförmige Abschnitt des dritten plattenförmigen Elements entlang einer rückwärtigen Oberfläche des bandförmigen Abschnitts des zweiten plattenförmigen Elements erstreckt, und ein oberer Abschnitt jedes bandförmigen Abschnitts des dritten plattenförmigen Elements in der entsprechenden Öffnung angeordnet ist, die an der anderen Seite des entsprechenden rechteckförmigen Abschnitts des zweiten plattenförmigen Elements platziert ist.

8. Stromführende Vorrichtung für einen Gleichstrommotor nach Anspruch 6, bei der der Polwender und die Gleitringe durch kranzförmiges Anordnen eines ersten plattenförmigen Elements (36) und eines zweiten plattenförmigen Elements (37) ausgebildet sind, wobei eine Vielzahl von Fenstern (36a), die jeweils dieselbe vorbestimmte Fensterbreite aufweisen, in das erste plattenförmige Element in vorbestimmten Abständen ausgebildet sind, die nahezu gleich der doppelten Breite der Fensterbreite entsprechen, wobei eine Nut (36b) zwischen jedem Paar zueinander benachbarter Fenster an einer rückwärtigen Oberfläche des ersten plattenförmigen Elements ausgebildet ist, so dass sie sich von einer Bodenseite eines Fensters entgegen einer Bodenseite des anderen Fensters erstreckt, um sich an einem Mittelpunkt zwischen den Bodenseiten der Fenster nach oben zu wenden, so dass sie sich gerade erstreckt und nach oben wendet und gerade zu einer oberen Seite des anderen Fensters erstreckt, wobei das zweite plattenförmige Element aus einem bandförmigen Abschnitt (37a) und einer Vielzahl von rechteckförmigen Abschnitten (37b) aufgebaut ist, die in denselben vorbestimmten Abständen von einer Seite des bandförmigen Abschnitts hervorstehen, wie die der Fenster des ersten plattenförmigen Elements, wobei die Seite des bandförmigen Abschnitts des zweiten plattenförmigen Elements auf eine Seite des ersten plattenförmigen Elements gerichtet ist, sich jeder rechteckförmige Abschnitt des zweiten plattenförmigen Elements entlang einer rückwärtigen Oberfläche des ersten plattenförmigen Elements erstreckt und ein oberer Abschnitt von jedem rechteckförmigen Abschnitt des zweiten plattenförmigen Elements in das entsprechende Fenster platziert ist.

9. Ventilvorrichtung, umfassend eine stromführende Vorrichtung nach einem der Ansprüche 1 bis 5 für einen Gleichstrommotor, umfassend:
einen Stator (122), in dem eine vorgeschriebene Anzahl von Spulen (24) in annähernd gleichen Abständen in einer Kreisumfangsrichtung von jedem der Vielzahl von Statorkernen (123) angeordnet sind;
einen Rotor (128) in dem eine Vielzahl von magnetischen Permanentmagnetpolen (129) an einer äußeren Umfangsoberfläche des Rotors angeordnet sind, so dass jeder Permanentmagnetpol in einer Position entsprechend zu der der entsprechenden Spule des Stators angeordnet ist,
Stromführmittel (137) zum Umwandeln eines Gleichstroms, welcher aus einer elektrischen Energiequelle durch den Rotor zugeführt wird, zu einem umgewandelten Strom durch Verwendung des Rotors und zum Führen des umgewandelten Stroms zu jeder Spule des Stators,
ein Wellenelement (130), welches in einem Zentrum des Rotors angeordnet ist und in axialer Richtung des Wellenelements gemäß der Rotation des Rotors bewegbar ist; und
ein Ventilelement (145) zum Durchführen eines Öffnungsbetriebs und eines Schließbetriebs gemäß der Bewegung des Wellenelements.

10. Ventilvorrichtung nach Anspruch 9, bei der die stromführenden Mittel integral mit den magnetischen Polen des Permanentmagnets des Rotors mittels Verwendung von harz eingegossen werden.

## Revendications

1. Appareil porteur de courant pour un moteur à courant continu, comprenant :
un commutateur (11, 19), qui possède plusieurs pièces (11a, 19a) de commutation agencées dans une direction circonférentielle circulaire du commutateur (11, 17) pour commuter un courant continu, qui est alimenté à partir d'une source d'alimentation électrique à travers un premier balai (14, 20), afin de donner N courants commutés ayant des phases différentes les unes des autres, successivement, N étant un entier naturel supérieur 1 ; et
N bagues collectrices (12, 18), qui sont séparées en forme d'anneaux et agencées de manière concentrique dans une zone circonférentielle du commutateur (11, 19) et sont respectivement et électriquement reliées avec une pièce (11a, 19a) de commutation du commutateur (11, 19), pour porter respectivement l'un des courants commutés obtenus dans le commutateur (11, 19) à une bobine correspondante (4) d'un stator (2) à travers un deuxième balai (15, 21), **caractérisé en ce qu'**une bague collectrice (12, 18) et les pièces respectives (11a, 19a) de commutation sont venues de matière.

2. Appareil porteur de courant pour un moteur à courant continu selon la revendication 1, dans lequel N bagues collectrices sont formées en divisant un disque circulaire en N parties divisées qui sont respectivement formées en anneaux de façon à être agencées de manière concentrique, et le commutateur est formé en divisant un organe cylindrique, qui fait saillie du centre du disque circulaire, en plusieurs pièces (19a) de commutation qui sont agencées dans une direction circonférentielle circulaire de l'organe cylindrique.

3. Appareil porteur de courant pour un moteur à courant continu selon la revendication 2, dans lequel une pièce (19b) de raccordement est formée dans une partie inférieure de chacune des pièces de commutation, chaque pièce de raccordement est fléchie de manière à s'étendre le long des surfaces inverses des bagues collectrices (18) et à être électriquement reliée à la bague collectrice correspondante.

4. Appareil porteur de courant pour un moteur à courant continu selon la revendication 1, dans lequel les bagues collectrices sont formées de N organes annulaires (23a ; 25a ; 27a) qui sont fermement ajustés les uns aux autres dans une direction radiale des organes annulaires, et le commutateur est formé d'un grand nombre de pièces (23b ; 25b ; 27b) de commutation qui sont composées de plusieurs parties de raccordement (24c ; 26c ; 28c) de différentes longueurs qui s'étendent de l'intérieur des organes annulaires, que l'on fléchit dans une direction perpendiculaire aux organes annulaires et que l'on agence de manière cylindrique à condition que les organes annulaires soient solidement ajustés les uns aux autres.

5. Appareil porteur de courant pour un moteur à courant continu selon la revendication 4, dans lequel le commutateur et les bagues collectrices sont formés de plusieurs parties arquées (24b ; 26b ; 28b) et de plusieurs parties rectangulaires (24c ; 26c ; 28c) respectivement en saillie de la partie arquée correspondante, les parties arquées sont reliées les unes aux autres à travers des parties à paroi mince (24a ; 26a ; 28a), les organes annulaires sont formés des parties arquées qui sont agencés de manière annulaire en pliant les parties à paroi mince des parties arquées, chacune des parties rectangulaires est formée selon une opération de laminage, et les pièces de commutation sont formées des parties rectangulaires, chacune desquelles est fléchie dans une direction perpendiculaire à la partie arquée correspondante à une position qui est séparée de la partie arquée à une longueur prescrite.

6. Appareil porteur de courant pour un moteur à courant continu, comprenant :
un commutateur (30, 31, 33) qui possède plusieurs pièces (30b, 31b, 33b) de commutation agencées dans une direction circonférentielle circulaire du commutateur (30, 31, 33), pour commuter un courant continu, qui est alimenté à partir d'une source d'alimentation électrique à travers un premier balai (20), afin de donner N courants commutés ayant des phases différentes les unes des autres, successivement, N étant un entier naturel supérieur à 1 ; et
N bagues collectrices (30a, 31a, 33a) qui sont séparées dans une direction axiale du commutateur (30, 31, 33) en forme d'anneaux, agencées de manière coaxiale et sont respectivement et électriquement reliées à une pièce (30b, 31b, 33b) de commutation du commutateur (30, 31, 33), pour porter respectivement l'un des courants commutés obtenus dans le commutateur (30, 31, 33) à une bobine correspondante (4) d'un stator (2) à travers un deuxième balai (21), **caractérisée en ce qu'**une bague collectrice (30a, 31a, 33a) et les pièces respectives (30b, 31b, 33b) de commutation sont venues de matière.

7. Appareil porteur de courant pour un moteur à courant continu selon la revendication 6, dans lequel le commutateur et les bagues collectrices sont formés en agençant de manière annulaire un premier organe (30) en forme de plaque, un deuxième organe (31) en forme de plaque et un troisième organe (33) en forme de plaque, le premier organe en forme de plaque est composé d'une partie (30a) en forme de bande et de plusieurs parties rectangulaires (30b) faisant saillie à intervalles réguliers d'un côté de la partie en forme de bande, le deuxième organe en forme de plaque est composé d'une partie (31a) en forme de bande et de plusieurs parties rectangulaires (31b) faisant saillie aux intervalles réguliers d'un côté de la partie en forme de bande, le premier organe en forme de plaque et le deuxième organe en forme de plaque sont venus de matière à travers une partie (35) de raccordement à paroi mince, un côté de chaque partie rectangulaire du deuxième organe en forme de plaque fait face à un côté d'une partie rectangulaire du premier organe en forme de plaque, et l'autre côté de la partie rectangulaire du deuxième organe en forme de plaque fait face à une autre partie rectangulaire du premier organe en forme de plaque à travers une ouverture (32) ayant une largeur prescrite, le troisième organe en forme de plaque est composé d'une partie (33a) en forme de bande et de plusieurs parties rectangulaires (33b) faisant saillie aux intervalles réguliers d'un côté de la partie en forme de bande, le côté de la partie en forme de bande du troisième organe en forme de plaque fait face à l'autre côté de la partie en forme de bande du deuxième organe en forme de plaque, chaque partie rectangulaire du troisième organe en forme de plaque s'étend le long d'une surface inverse de la partie en forme de bande du deuxième organe en forme de plaque, et une partie supérieure de chaque partie rectangulaire du troisième organe en forme de plaque est agencée dans l'ouverture correspondante qui est placée sur l'autre côté de la partie rectangulaire correspondante du deuxième organe en forme de plaque.

8. Appareil porteur de courant pour un moteur à courant continu selon la revendication 6, dans lequel le commutateur et les bagues collectrices sont formés en agençant de manière annulaire un premier organe (36) en forme de plaque et un deuxième organe (37) en forme de plaque, plusieurs fenêtres (36a) ayant respectivement la même largeur prescrite de fenêtre sont formées dans le premier organe en forme de plaque à intervalles prescrits qui sont quasiment égaux à deux fois la largeur de la fenêtre, une rainure (36b) est formée entre chaque paire de fenêtres de manière adjacente les unes aux autres sur une surface inverse du premier organe en forme de plaque afin de s'étendre de façon droite d'un côté inférieur d'une fenêtre vers un côté inférieur de l'autre fenêtre, de tourner vers le haut à un point central entre les côtés inférieurs des fenêtres, de s'étendre de façon droite et de tourner et s'étendre de façon droite à un côté supérieur de l'autre fenêtre, le deuxième organe en forme de plaque est composé d'une partie (37a) en forme de bande et de plusieurs parties rectangulaires (37b) faisant saillie d'un côté de la partie en forme de bande aux mêmes intervalles prescrits que ceux des fenêtres du premier organe en forme de plaque, le côté de la partie en forme de bande du deuxième organe en forme de plaque fait face à un côté du premier organe en forme de plaque, chaque partie rectangulaire du deuxième organe en forme de plaque s'étend le long d'une surface inverse du premier organe en forme de plaque, et une partie supérieure de chaque partie rectangulaire du deuxième organe en forme de plaque est placée dans la fenêtre correspondante.

9. Dispositif de soupape comportant un appareil porteur de courant selon les revendications 1 à 5 pour un moteur à courant continu, comprenant :
un stator (122) dans lequel un nombre prescrit de bobines (24) sont agencées à intervalles quasi égaux dans une direction circonférentielle circulaire de chacun d'une pluralité de noyaux (123) du stator.
un rotor (128) dans lequel plusieurs pôles magnétiques (129) à aimants permanents sont agencés sur une surface circonférentielle extérieure du rotor de manière à placer chaque pôle à aimant permanent à une position correspondant à celle de la bobine correspondante du stator,
un moyen (137) porteur de courant pour commuter un courant continu, qui est alimenté à partir d'une source d'alimentation électrique à travers le rotor, vers un courant commuté en utilisant le rotor et pour porter le courant commuté à chaque bobine du stator.
un élément (130) d'arbre, qui est agencé dans un centre du rotor et est mobile dans une direction axiale de l'élément d'arbre selon la rotation du rotor ; et un élément (145) de soupape pour procéder à une opération d'ouverture et une opération de fermeture selon le mouvement de l'élément d'arbre.

10. Dispositif de soupape selon la revendication 9, dans lequel le moyen porteur de courant est moulé d'une seule pièce avec les pôles magnétiques à aimants permanents du rotor en utilisant de la résine.
